(19) Europäisches Patentamt
European Patent Office
Office européen des brevets

(11) **EP 4 068 113 A1**

(12) **EUROPEAN PATENT APPLICATION**
published in accordance with Art. 153(4) EPC

(43) Date of publication:
**05.10.2022 Bulletin 2022/40**

(21) Application number: **20893457.0**

(22) Date of filing: **25.11.2020**

(51) International Patent Classification (IPC):
**G06F 16/33** (2019.01)

(52) Cooperative Patent Classification (CPC):
**G06F 40/30; G06F 16/3329; G06F 16/3344;**
**G06F 16/3347; G06N 3/0445; G06V 30/19093;**
**G06V 30/19187;** G06N 3/0481

(86) International application number:
**PCT/CN2020/131554**

(87) International publication number:
**WO 2021/104323 (03.06.2021 Gazette 2021/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.11.2019 CN 201911168162**

(71) Applicant: **BOE Technology Group Co., Ltd.**
**Beijing 100015 (CN)**

(72) Inventors:
• **HU, Yulan**
**Beijing 100176 (CN)**
• **ZHANG, Lu**
**Beijing 100176 (CN)**

(74) Representative: **Hoffmann Eitle**
**Patent- und Rechtsanwälte PartmbB**
**Arabellastraße 30**
**81925 München (DE)**

(54) **METHOD FOR DETERMINING TEXT SIMILARITY, METHOD FOR OBTAINING SEMANTIC ANSWER TEXT, AND QUESTION ANSWERING METHOD**

(57) A method for determining a text similarity, a method for obtaining a semantic answer text, and a question answering method, relating to the technical filed of intelligent question answering. A method for determining a text similarity, comprising: converting a text to be answered into a semantic vector to be answered; and calculating the similarity between said semantic vector and a question semantic vector of each of at least one question text, each similarity being a text similarity between a semantic text to be answered and a question text.

FIG. 4

**Description**

This application claims priority to Chinese Patent Application No. 201911168162.5, filed on November 25, 2019, which is incorporated herein by reference in its entirety.

TECHNICAL FIELD

The present disclosure relates to the field of smart question answering technologies, and in particular, to a method for determining a text similarity, a method for obtaining a semantic answer text, and a question answering method.

BACKGROUND

With the rapid development of big data and computing resources, artificial intelligence technologies shows excellent effects in the fields such as machine translation and speech recognition.

In the medical field, the artificial intelligence technology has also scored some achievements in, for example, smart consultation, robots for guiding patients, smart questions and answers and structured electronic medical records, the underlying technology of which depends on the development and progress of natural language processing technology.

However, in the smart questions and answers, there is still a problem of low accuracy with respect to the answers provided regarding the users' questions due to the complexity of the language itself.

SUMMARY

In one aspect, a method for determining a text similarity is provided. The method for determining the text similarity includes: converting a text to be answered into a semantic vector to be answered; and calculating a similarity between the semantic vector to be answered and a question semantic vector of each of at least one question text, and each similarity being a text similarity between a semantic text to be answered and a question text.

In some embodiments, the method for determining the text similarity further includes: converting each of the at least one question text into the question semantic vector.

In some embodiments, the text to be answered includes at least one word to be answered, and the converting a text to be answered into a semantic vector to be answered includes: mapping the text to be answered into a word embedding vector of the at least one word to be answered; and converting the word embedding vector of the at least one word to be answered into the semantic vector to be answered. In a case where the method for determining the text similarity includes converting each of the at least one question text into a question semantic vector, the method for determining the text similarity includes: a question text including at least one question word, and the converting each of the at least one question text into a question semantic vector includes: mapping the question text into a word embedding vector of the at least one question word, and converting the word embedding vector of the at least one question word into the question semantic vector.

In some embodiments, the converting the word embedding vector of the at least one word to be answered into the semantic vector to be answered includes: converting the word embedding vector of the at least one word to be answered into the semantic vector to be answered using a first neural network. The converting the word embedding vector of the at least one question word into the question semantic vector includes: converting the word embedding vector of the at least one question word into the question semantic vector using a second neural network. The first neural network and the second neural network are siamese networks.

In some embodiments, the converting the word embedding vector of the at least one word to be answered into the semantic vector to be answered includes: calculating a first forward vector $\vec{h}_Q$ according to the word embedding vector $\{x_1, x_2, ... x_t, ... x_{T1}\}$ of the at least one word to be answered, $\vec{h}_Q=(\vec{h}_1,\vec{h}_2,\cdots,\vec{h}_t,\cdots\vec{h}_{T1})$, $t\in\{1,...,T1\}$; and $\vec{h}_Q$ and $\{x_1, x_2, ... x_t, ... x_{T1}\}$ satisfying a first set of relations; calculating a first opposite vector $\overleftarrow{h}_Q$ according to the word embedding vector $\{x_1, x_2, ... x_t, ... x_{T1}\}$ of the at least one word to be answered, $\overleftarrow{h}_Q=(\overleftarrow{h}_1,\overleftarrow{h}_2,\cdots\overleftarrow{h}_t\cdots, \overleftarrow{h}_{T1})$; and $\overleftarrow{h}_Q$ and $\{x_1, x_2, ... x_t, ... x_{T1}\}$ satisfying a second set of relations; calculating the semantic vector to be answered $H_Q$ through $H_Q = [\vec{h}_Q,\overleftarrow{h}_Q]$, according to the first forward vector $\vec{h}_Q$ and the first opposite vector $\overleftarrow{h}_Q$. And/or, the converting the word embedding vector of the at least one question word into the question semantic vector includes: calculating a second forward vector $\vec{h}_s$ according to the word embedding vector $\{x_1, x_2, ... x_t, ... x_{T2}\}$ of the at least one question word, $\vec{h}s=(\vec{h}_1,\vec{h}_2,\cdots\vec{h}_t,\cdots\vec{h}_{T2})$, $t\in\{1,\cdots,T2\}$, $t\in\{1,\cdots,T1\}$; and $\vec{h}_s$ and $\{x_1, x_2, ... x_t, ... x_{T2}\}$ satisfying the first set of relations; calculating a second opposite vector $\overleftarrow{h}_s$ according to the word embedding vector $\{x_1, x_2, ... x_t, ... x_{T2}\}$ of the at least one question word, $\overleftarrow{h}_s= (\overleftarrow{h}_1,\overleftarrow{h}_2, \cdots \overleftarrow{h}_t ...\overleftarrow{h}_{T2})$, and $\overleftarrow{h}_s$ and $\{x_1, x_2, ... x_t, ... x_{T2}\}$ satisfying the second set of relations; And obtaining the question semantic vector $H_s$ through $H_s=[\vec{h}_s,\overleftarrow{h}_s]$, according to the second forward vector $\vec{h}_s$ and the second opposite vector $\overleftarrow{h}_s$.

The first set of relations includes:

$$i_t = \text{sigmoid}(W_i x_t + U_i \vec{h}_{t-1} + b_i);$$

$$f_t = \text{sigmoid}(W_f x_t + U_f \vec{h}_{t-1} + b_f);$$

$$\tilde{c}_t = \tanh(W_c x_t + U_c \vec{h}_{t-1} + b_c);$$

$$c_t = i_t \times \tilde{c}_t + f_t \times c_{t-1};$$

$$o_t = \text{sigmoid}(W_o x_t + U_o \vec{h}_{t-1} + b_o);$$

$$\vec{h}_t = o_t \times \tanh(c_t).$$

The second set of relations includes:

$$i_t = \text{sigmoid}(W_i y_t + U_i \overline{h}_{t+1} + b_i);$$

$$f_t = \text{sigmoid}(W_f y_t + U_f \overline{h}_{t+1} + b_f);$$

$$\tilde{c}_t = \tanh(W_c y_t + U_c \overline{h}_{t+1} + b_c);$$

$$c_t = i_t \times \tilde{c}_t + f_t \times c_{t+1};$$

$$o_t = \text{sigmoid}(W_o y_t + U_o \overline{h}_{t+1} + b_o);$$

$$\overline{h}_t = o_t \times \tanh(c_t).$$

Wherein i is an input gate, f is a forget gate, o is an output gate, c is a memory unit, $\tilde{c}$ is a temporary memory unit, Wi, Wf, Wc, Wo, Ui, Uf, Uc, and Uo are weight matrices, bi, bf, bc and bo are bias vectors, and $x_t$ represents a word embedding vector of a t-th word to be answered or a word embedding vector of a t-th question word.

In some embodiments, the calculating a similarity between the semantic vector to be answered and a question semantic vector of each of at least one question text includes: calculating a cosine value between the semantic vector to be answered and the question semantic vector, and the cosine value satisfying a following condition:

$$\cos\theta = \frac{H_Q H_S}{\|H_Q\| \|H_S\|}$$

, wherein cos θ is the cosine value, $H_Q$ is the semantic vector to be answered, and $H_S$ is the question semantic vector. The cosine value is used as a text similarity between the semantic vector to be answered and the question semantic vector; or, the cosine value is converted into the text similarity between the semantic vector to be answered and the question semantic vector, and there is a functional relationship of increasing function between the text similarity between the semantic vector to be answered and the question semantic vector and the cosine value.

In some embodiments, the increasing function is $Sim_{BiLSTM\text{-}Siamese}(Q, S)=0.5+0.5\cos\theta$, and $Sim_{BiLSTM\text{-}Siamese}(Q,S)$ is the text similarity.

In another aspect, a method for obtaining a semantic answer text is provided. The method for obtaining the semantic answer text includes: obtaining at least one question text according to a text to be answered; obtaining the text similarity between the text to be answered and each question text adopting the method for determining the text similarity as described in any of the above embodiments; determining a target question text from the at least one question text, a text similarity between the text to be answered and the target question text satisfying a preset condition; and obtaining a semantic answer text corresponding to the target question text.

In some embodiments, the determining a target question text from the at least one question text includes: calculating a second calculation similarity between the text to be answered and each of the at least one question text; the second calculation similarity satisfying a following condition: $sim(E,F)=\alpha Sim_{BiLSTM\text{-}Siamese}(E,F)+\beta Sim_{jaccard}(E,F)$, wherein $sim(E,F)$ is the second calculation similarity, $Sim_{BiLSTM\text{-}Siamese}(E,F)$ is the text similarity, $Sim_{jaccard}(E,F)$ is a first

$$Sim_{jaccard}(E,F)=\frac{Inter(E,F)}{Union(E,F)}$$

calculation similarity; , E is the text to be answered, F is the question text, Inter (E, F) represents a number of words in an intersection of the text to be answered and the question text, Union (E, F) represents a number of words in a union of the text to be answered and the question text, $\alpha$ is a weight corresponding to the text similarity, $\beta$ is a weight corresponding to the first calculation similarity; and a sum of $\alpha$ and $\beta$ is 1 ($\alpha + \beta = 1$), $\alpha$ is greater than or equal to 0 and is less than or equal to 1 ($0 \le \alpha \le 1$), and $\beta$ is greater than or equal to 0 and is less than or equal to 1 ($0 \le \beta \le 1$). The preset condition satisfied by the text similarity between the text to be answered and the target question text includes the second calculation similarity between the text to be answered and the target question text being greater than a similarity threshold.

In some embodiments, the obtaining at least one question text according to a text to be answered includes: retrieving an index file to obtain at least one candidate question text, according to the text to be answered, calculating a relevance between the text to be answered and each candidate question text; and using a candidate question text with a relevance satisfying a relevance threshold condition as the question text.

In yet another aspect, a question answering method is provided. The question answering method includes: obtaining a text to be answered; performing the method for obtaining the semantic answer text according to any of the above embodiments to obtain a semantic answer text corresponding to the text to be answered; and/or, identifying, from the text to be answered, at least one piece of entity information in the text to be answered using named entity recognition; the entity information including an entity and/or an entity category, and the entity category including at least one entity; obtaining a suggestion text corresponding to the entity information as a suggestion answer text corresponding to the text to be answered; and outputting a target answer corresponding to the text to be answered, the target answer including a multimedia file corresponding to the semantic answer text or a multimedia file corresponding to the suggestion answer text.

In some embodiments, in a case where the entity information includes the entity, the obtaining a suggestion text corresponding to the entity information includes: searching for a suggestion text corresponding to the entity, and the suggestion answer text including the suggestion text corresponding to the entity. In a case where the entity information includes the entity category, the obtaining a suggestion text corresponding to the entity information as a suggestion answer text corresponding to the text to be answered includes: determining at least one entity included in the entity category, and searching for a suggestion text corresponding to the at least one entity, the suggestion answer text including the suggestion text corresponding to the at least one entity.

In some embodiments, the entity is food, and the entity category is a food category. The identifying, from the text to be answered, at least one piece of entity information in the text to be answered using named entity recognition includes: identifying the food and/or the food category in the text to be answered using the named entity recognition. The searching for a suggestion text corresponding to the entity includes: searching, from a food database, for an ingredients table of the food in the text to be answered, the ingredients table of the food including a content of at least one ingredient in the food; obtaining a content level corresponding to the content of the at least one ingredient in the food; and searching, from a suggestion base, for the suggestion text corresponding to the content level of the at least one ingredient in the food. The determining at least one entity included in the entity category and searching for a suggestion text corresponding to the at least one entity includes: determining, from the food database, at least one type of food included in the food category in the text to be answered; searching for an ingredients table of each of the at least one type of food, the ingredients table of each type of food including a content of at least one ingredient in the food; obtaining a content level corresponding to the content of the at least one ingredient in each type of food; and searching, from the suggestion base, for the suggestion text corresponding to the content level of the at least one ingredient in each type of food.

In some embodiments, the ingredients table of the food includes sugar content and/or starch content in the food.

In some embodiments, before the identifying, from the text to be answered, at least one piece of entity information in the text to be answered using named entity recognition, the question answering method further includes: obtaining a question category of the text to be answered, and the question category including diet and non-diet. The identifying, from the text to be answered, at least one piece of entity information in the text to be answered using named entity recognition includes: in a case where the question category of the text to be answered is diet, identifying, from the text to be answered, the at least one piece of entity information in the text to be answered using the named entity recognition.

In some embodiments, the obtaining a question category of the text to be answered includes: classifying a feature attribute for the text to be answered, calculating a conditional probability that the feature attribute appears in each question category, calculating a probability that the text to be answered belongs to each question category, according to the conditional probability that the feature attribute appears in each question category; and obtaining a question category corresponding to a maximum probability as the question category of the text to be answered.

In some embodiments, the outputting a target answer text corresponding to the text to be answered includes: if the text to be answered is of diet and the suggestion answer text is obtained, outputting the suggestion answer text; and if not, outputting the semantic answer text.

In some embodiments, the question answering method further includes: obtaining priorities of a plurality of preset question texts according to the text to be answered; and outputting at least one first preset question text according to the priorities of the plurality of preset question texts, each first preset question text being one of the plurality of preset question texts; or, outputting at least one second preset question text according to a preset question screening condition, the second preset question screening condition is unrelated to the text to be answered.

In some embodiments, the obtaining priorities of a plurality of preset question texts according to the text to be answered includes: obtaining similarities between the plurality of preset question texts and the text to be answered, determining the priorities of the plurality of preset question texts according to the similarities, and a similarity being proportional to a priority; or, the text to be answered including at least one keyword, obtaining similarities between the plurality of preset question texts and the at least one keyword, and determining the priorities of the plurality of preset question texts according to the similarities; or, obtaining degrees of association between the plurality of preset questions and the text to be answered, determining the priorities of the plurality of preset question texts according to the degrees of association, and a priority being proportional to a degree of association.

In some embodiments, the outputting at least one second preset question text according to a preset question screening condition includes: obtaining a number of clicks of the plurality of preset question texts, and according to a descending order of the number of clicks, outputting at least one preset question text top ranked in the plurality of preset question texts as second preset question text(s); or, outputting the at least one second preset question text according to at least one of an application scenario, current time and weather.

In some embodiments, the obtaining a text to be answered includes: obtaining a request including a question to be answered sent by a terminal, and obtaining the text to be answered according to the request, the text to be answered being a question to be answered in a text form. The outputting at least one second preset question text according to a preset question screening condition includes: outputting the at least one second preset question text to the terminal according to the preset question screening condition after an online notification of the terminal is received and before a request to be answered sent by the terminal is obtained.

In some embodiments, the multimedia file includes at least one of a text, a voice file and a video file.

In some embodiments, the question answering method further includes: outputting at least one first article link related to the text to be answered; or, outputting at least one second article link according to a preset article screening condition, and the preset article screening condition being unrelated to the text to be answered.

In some embodiments, the outputting at least one second article link according to a preset article screening condition includes: obtaining a number of clicks of a plurality of article links, and according to a descending order of the number of clicks, using at least one article link top ranked in the plurality of article links as second article link(s); or, outputting the at least one second article link according to at least one of the application scenario, the current time and the weather.

In some embodiments, the obtaining a text to be answered includes: obtaining the request including the question to be answered sent by the terminal, and obtaining the text to be answered according to the request, the text to be answered being the question to be answered in a text form. The outputting at least one second article link according to a preset article screening condition includes: outputting the at least one second article link according to the preset article screening condition after the online notification of the terminal is received and before the request to be answered sent by the terminal is obtained.

In yet another aspect, a question answering method is provided. The question answering method includes: displaying a first interface; obtaining a question to be answered in response to a user's first operation on the first interface; and outputting a target answer corresponding to a text to be answered, and the target answer including a multimedia file corresponding to a semantic answer text or a multimedia file corresponding to a suggestion answer text; the semantic answer text being the semantic answer text obtained according to any of the above embodiments; and the suggestion answer text being the suggestion answer text obtained according to any of the above embodiments.

In some embodiments, after the obtaining a question to be answered, the question answering method further includes: displaying a second interface, the second interface including at least one of a first preset question text and an article category identifier, and the first preset question text being the first preset question text according to claim 18; outputting a preset answer text corresponding to the first preset question text in response to the user's second operation for the first preset question text, in a case where the second interface includes the first preset question text; and outputting at least one first article link corresponding to the article category identifier in response to the user's third operation for the article category identifier, in a case where the second interface includes the article category identifier, and the first article link being the first article link as described above.

In some embodiments, before the obtaining a question to be answered, the first interface includes at least one of a second preset question text and the article category identifier. In a case where the first interface includes the second preset question text, a preset answer text corresponding to the second preset question text is output in response to the user's fourth operation for the second preset question text. In a case where the first interface includes the article category identifier, at least one second article link corresponding to the article category identifier is output in response to the user's fifth operation for the article category identifier.

In yet another aspect, an apparatus for determining a text similarity is provided. The apparatus for determining the text similarity includes a processing module and a calculation module. The processing module is configured to convert a text to be answered into a semantic vector to be answered. The calculation module is configured to calculate a similarity between the semantic vector to be answered and a question semantic vector of each of at least one question text, and each similarity is a text similarity between a semantic text to be answered and a question text.

In yet another aspect, an apparatus for obtaining a semantic answer text is provided. The apparatus for obtaining the semantic answer text includes an obtaining module and a determining module. The obtaining module is configured to obtain at least one question text according to a text to be answered. The obtaining module is further configured to obtain the text similarity between the text to be answered and each question text adopting the method for determining the text similarity according to any of claims 1 to 7. The determining module is configured to determine a target question text from the at least one question text obtained by the obtaining module, and a text similarity between the text to be answered and the target question text satisfying a preset condition. The obtaining module is further configured to obtain a semantic answer text corresponding to the target question text.

In yet another aspect, a question answering apparatus is provided. The question answering apparatus includes an obtaining module, an identification module, and an output module. The obtaining module is configured to obtain a text to be answered. The obtaining module is further configured to obtain a semantic answer text corresponding to the text to be answered by performing the method for obtaining the semantic answer text according to any of the above embodiments. And/or, the identification module is configured to identify, from the text to be answered obtained by the obtaining module, at least one piece of entity information in the text to be answered using named entity recognition; the entity information including an entity and/or an entity category, and the entity category including at least one entity. The obtaining module is further configured to obtain a suggestion text corresponding to the entity information as a suggestion answer text corresponding to the text to be answered. The output module is configured to output a target answer corresponding to the text to be answered, and the target answer includes a multimedia file corresponding to the semantic answer text or a multimedia file corresponding to the suggestion answer text.

In yet another aspect, a question answering apparatus is provided. The question answering apparatus includes: a display module, an obtaining module, and an output module. The display module is configured to display a first interface. The obtaining module is configured to obtain a question to be answered in response to a user's first operation on the first interface. The output module is configured to output a target answer corresponding to a text to be answered, and the target answer includes a multimedia file corresponding to a semantic answer text or a multimedia file corresponding to a suggestion answer text; the semantic answer text is the semantic answer text obtained according to any of the above embodiments; and the suggestion answer text is the suggestion answer text obtained according to any of the above embodiments.

In yet another aspect, a computer device is provided. The computer device includes a memory and a processor. The memory stores thereon a computer program executable on the processor. The method for determining the text similarity according to any of the above embodiment is implemented when the processor executes the computer program. Or, the processor implements the method for obtaining the semantic answer text according to any of the above embodiments is implemented when the processor executes the computer program. Or, the question answering method according to any of the above embodiments is implemented when the processor executes the computer program.

In yet another aspect, a computer-readable storage medium is provided. The computer-readable storage medium stores a computer program. The method for determining the text similarity according to any of the above embodiments is implemented when the processor executes the computer program. Or, the method for obtaining the semantic answer text according to any of the above embodiments is implemented when the processor executes the computer program. Or, the question answering method according to any of the above embodiments is implemented when the processor executes the computer program.

## BRIEF DESCRIPTION OF THE DRAWINGS

In order to describe technical solutions in the present disclosure more clearly, the accompanying drawings to be used in some embodiments of the present disclosure will be introduced briefly below. Obviously, the accompanying drawings to be described below are merely accompanying drawings of some embodiments of the present disclosure, and a person of ordinary skill in the art can obtain other drawings according to these drawings. In addition, the accompanying drawings to be described below may be regarded as schematic diagrams, and are not limitations on an actual size of a product, an actual process of a method and an actual timing of a signal involved in the embodiments of the present disclosure.

FIG. 1 is a diagram showing system architecture, in accordance with some embodiments of the present disclosure;
FIG. 2 is a structural diagram of an electronic device, in accordance with some embodiments of the present disclosure;
FIG. 3 is a structural diagram of a server, in accordance with some embodiments of the present disclosure;
FIG. 4 is a flow diagram of a question answering method, in accordance with some embodiments of the present disclosure;
FIG. 5A is a diagram of a first interface, in accordance with some embodiments of the present disclosure;
FIG. 5B is a diagram of an interface of a smart assistant, in accordance with some embodiments of the present disclosure;
FIG. 6A is a diagram of an interface, in accordance with some embodiments of the present disclosure;
FIG. 6B is a diagram of another interface, in accordance with some embodiments of the present disclosure;
FIG. 6C is a diagram of yet another interface, in accordance with some embodiments of the present disclosure;
FIG. 6D is a diagram of yet another interface, in accordance with some embodiments of the present disclosure;
FIG. 6E is a diagram of yet another interface, in accordance with some embodiments of the present disclosure;
FIG. 6F is a diagram of yet another interface, in accordance with some embodiments of the present disclosure;
FIG. 7 is a diagram of yet another interface, in accordance with some embodiments of the present disclosure;
FIG. 8 is a flow diagram of a method for determining a text similarity, in accordance with some embodiments of the present disclosure;
FIG. 9 is a flow diagram of another method for determining a text similarity, in accordance with some embodiments of the present disclosure;
FIG. 10 is a flow diagram of yet another method for determining a text similarity, in accordance with some embodiments of the present disclosure;
FIG. 11 is a flow diagram of yet another method for determining a text similarity, in accordance with some embodiments of the present disclosure;
FIG. 12 is a flow diagram of a method for obtaining a semantic answer text, in accordance with some embodiments of the present disclosure;
FIG. 13 is a diagram of yet another interface, in accordance with some embodiments of the present disclosure;
FIG. 14 is a flow diagram of another method for obtaining a semantic answer text, in accordance with some embodiments of the present disclosure;
FIG. 15 is a flow diagram of another question answering method, in accordance with some embodiments of the present disclosure;
FIG. 16 is a flow diagram of yet another question answering method, in accordance with some embodiments of the present disclosure;
FIG. 17 is a flow diagram of a method for training a question classification model, in accordance with some embodiments of the present disclosure;
FIG. 18 is a flow diagram of training a question answering model, in accordance with some embodiments of the present disclosure;
FIG. 19 is a list, in accordance with some embodiments of the present disclosure;
FIG. 20 is another list, in accordance with some embodiments of the present disclosure;
FIG. 21 is yet another list, in accordance with some embodiments of the present disclosure;
FIG. 22 is yet another list, in accordance with some embodiments of the present disclosure;
FIG. 23 is yet another list, in accordance with some embodiments of the present disclosure;
FIG. 24 is a structural diagram of an apparatus for determining a text similarity, in accordance with some embodiments of the present disclosure;
FIG. 25 is a structural diagram of an apparatus for obtaining a semantic answer text, in accordance with some embodiments of the present disclosure;

FIG. 26 is a structural diagram of a question answering apparatus, in accordance with some embodiments of the present disclosure; and

FIG. 27 is a structural diagram of another question answering apparatus, in accordance with some embodiments of the present disclosure.

DETAILED DESCRIPTION

Technical solutions in some embodiments of the present disclosure will be described clearly and completely below with reference to the accompanying drawings. Obviously, the described embodiments are merely some but not all embodiments of the present disclosure. All other embodiments obtained on the basis of the embodiments of the present disclosure by a person of ordinary skill in the art shall be included in the protection scope of the present disclosure.

Unless the context requires otherwise, throughout the description and the claims, the term "comprise" and other forms thereof such as the third-person singular form "comprises" and the present participle form "comprising" are construed as an open and inclusive meaning, i.e., "including, but not limited to." In the description, the terms such as "one embodiment," "some embodiments," "exemplary embodiments," "example," "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). In addition, the specific features, structures, materials, or characteristics may be included in any one or more embodiments or examples in any suitable manner.

Hereinafter, the terms "first" and "second" are only used for descriptive purposes, and are not to be construed as indicating or implying relative importance or implicitly indicating the number of indicated technical features. Thus, features defined as "first" and "second" may explicitly or implicitly include one or more of the features.

In the description of the embodiments of the present disclosure, "a plurality of", "the plurality of" and "multiple" mean two or more unless otherwise specified.

The phrase "at least one of A, B and C" has a same meaning as the phrase "at least one of A, B or C", and they both include the following combinations of A, B and C: only A, only B, only C, a combination of A and B, a combination of A and C, a combination of B and C, and a combination of A, B and C.

The phrase "A and/or B" includes the following three combinations: only A, only B, and a combination of A and B.

As used herein, the term "if" is optionally construed as "when" or "in a case where" or "in response to determining that" or "in response to detecting", depending on the context. Similarly, the phrase "if it is determined" or "if [a stated condition or event] is detected" is optionally construed as "in a case where it is determined" or "in response to determining" or "in a case where [the stated condition or event] is detected" or "in response to detecting [the stated condition or event]", depending on the context.

The use of the phrase "applicable to" or "configured to" herein means an open and inclusive language, which does not exclude devices that are applicable to or configured to perform additional tasks or steps.

In addition, the use of the phrase "based on" is meant to be open and inclusive, since a process, step, calculation or other action that is "based on" one or more of the stated conditions or values may, in practice, be based on additional conditions or values exceeding those stated.

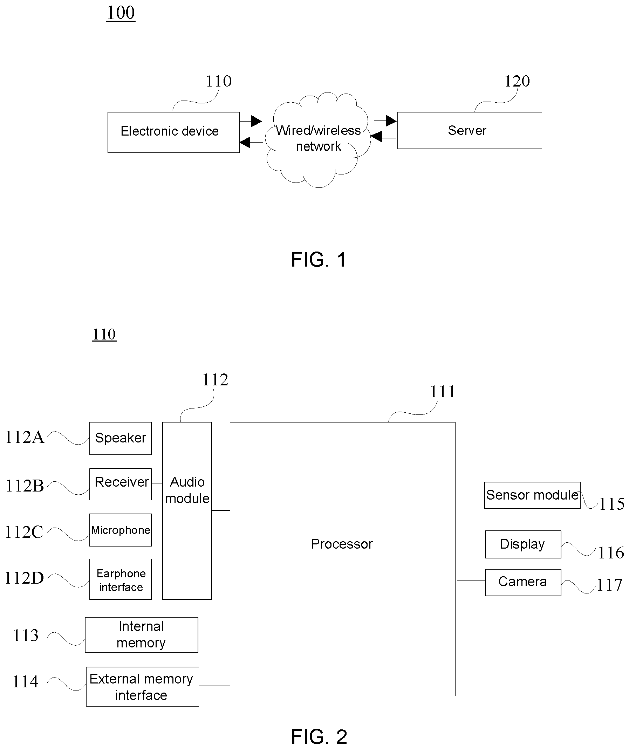

Some embodiments of the present disclosure provide a question answering method whereby a user may input a question (i.e., a question to be answered described below) that the user intends to know into an electronic device (e.g., a terminal), then the terminal sends a request including the question to be answered to a server after obtaining the question to be answered, and after receiving the request from the terminal, the server obtains a text to be answered according to the request and outputs a target answer corresponding to the text to be answered. The target answer includes a multimedia file corresponding to a semantic answer text or a multimedia file corresponding to a suggestion answer text. FIG. 1 shows system architecture 100 that implements the above question answering method. Referring to FIG. 1, the system architecture 100 includes an electronic device 110 and a server 120. The electronic device 110 is configured to obtain the question to be answered input by the user, and is further configured to access the server 120 through a wired or wireless network to output the target answer corresponding to the text to be answered. The server 120 is configured to obtain the text to be answered and output the target answer corresponding to the text to be answered, according to the request including the question to be answered sent by the electronic device 110.

The embodiments do not limit the type of the electronic device 110. For example, the electronic device may be a mobile phone, a desktop computer, a tablet computer, a notebook computer, a palmtop computer, a vehicle-mounted terminal, a wearable device, an ultra-mobile personal computer (UMPC) or a netbook.

FIG. 2 is a structural diagram of the electronic device 100 in FIG. 1, in accordance with the embodiments.

The electronic device 110 may include a processor 111, an audio module 112, a speaker 112A, a receiver 112B, a microphone 112C, an earphone interface 1112D, an internal memory 113, an external memory interface 114, a sensor module 115, a display 116, and a camera 117.

It will be understood that, the structure illustrated in the embodiments of the present disclosure does not constitute a specific limitation on the electronic device 110. In some other embodiments of the present application, the electronic device 110 may include more or less components than what are shown in the figure, or combine some components, or detach some components, or have a different component arrangement. The illustrated components may be realized in hardware, software, or a combination of software and hardware.

The processor 111 may include one or more processing units. For example, the processor 111 may include an application processor (AP), a modem processor, a graphics processing unit (GPU), an image signal processor (ISP), a controller, a memory, a video codec, a digital signal processor (DSP), a baseband processor, and/or a neural-network processing unit (NPU). Different processing units may be separate devices, or may be integrated in one or more processors.

A memory may also be disposed in the processor 111 to store instructions and data. In some embodiments, the memory in the processor 111 is a cache memory. The memory may store instructions or data just used or cyclically used by the processor 111. If the processor 111 needs to reuse the instructions or data, the instructions or data may be directly called from the memory, which avoids repeated access, and reduces the wait time of the processor 111, thereby improving an efficiency of the system.

In some embodiments, the processor 111 may include one or more interfaces. The interfaces may include an inter-integrated circuit (I2C) interface, an inter-integrated circuit sound (I2S) interface, a pulse code modulation (PCM) interface, a universal asynchronous receiver/transmitter (UART) interface, a mobile industry processor (MIP) interface, a general-purpose input/output (GPIO) interface, a subscriber identity module (SIM) interface, and/or a universal serial bus (USB) interface.

The electronic device 110 realizes a display function through the GPU, the display 116, the application processor, and the like. The GPU is a microprocessor for image processing, and is connected to the display 116 and the application processor. The GPU is used to perform mathematical and geometric calculations for graphics rendering. The processor 110 may include one or more GPUs, and executes program instructions to generate or change display information.

The display 116 may be used to display images, videos, and the like. The display 116 includes a display panel. The display panel may adopt a liquid crystal display (LCD), an organic light-emitting diode (OLED), an active-matrix organic light-emitting diode (AMOLED), a flexible light-emitting diode (FLED), a mini-LED, a micro-LED, a micro-OLED, a quantum dot light-emitting diode (QLED), etc. In some embodiments, the electronic device 110 may include one or N displays 116, and N is a positive integer greater than 1.

The external memory interface 114 may be used to connect an external memory card, such as a Micro SD card, so as to expand a storage capacity of the electronic device 110. The external memory card communicates with the processor 111 through the external memory interface 120 to realize a data storage function. For example, music, video and other files are saved in the external memory card.

The internal memory 113 may be used to store computer-executable program codes that include instructions. The processor 111 performs various functional applications and data processing of the electronic device 110 by executing the instructions stored in the internal memory 113. The internal memory 113 may include a program storage region and a data storage region. The program storage region may store an operating system, an application program (e.g., a sound playback function, and an image playback function) required for at least one function. The data storage region may store data (e.g., audio data and a telephone book) created during the use of the electronic device 110. In addition, the internal memory 113 may include a high-speed random access memory, and may also include a non-volatile memory, for example, at least one magnetic disk storage device, a flash memory device, and a universal flash storage (UFS).

The electronic device 100 may implement audio functions, for example, music playback, recording, etc., through the audio module 112, the speaker 112A, the receiver 112B, the microphone 112C, the earphone interface 112D, the application processor, and the like.

The audio module 112 is used to convert digital audio information into analog audio signals for output, and is also used to convert analog audio input into digital audio information. The audio module 112 may also be used to encode and decode audio signals. In some embodiments, the audio module 112 may also be disposed in the processor 111, or part of function modules of the audio module 112 is disposed in the processor 111.

The speaker 112A, also referred to as "horn", is used to convert the audio electrical signals into sound signals. Listening to music or receiving hands-free calls may be realized on the electronic device 100 through the speaker 112A.

The receiver 112B, also referred to as "handset", is used to convert the audio electrical signals into the sound signals. When the electronic device 110 is used to answer a call, the call may be answered by placing the receiver 112B close to human ears.

The microphone 112C, also referred to as "mouthpiece", or "mike", is used to convert the sound signals into electrical signals. When making a call or inputting a question to be answered through speech, the user speaks with his or her mouth close to the microphone 112C to inputs the sound signals into the microphone 112C. At least one microphone 112C may be disposed in the electronic device 110. In some other embodiments, two microphones 112C may be disposed in the electronic device 110, which may realize a noise reduction function in addition to the sound signal collection. In some other embodiments, three, four or more microphones 112C may also be disposed in the electronic device 110 to collect the sound signals, reduce noise, and identify sources of sounds to realize a function of directional recording.

The earphone interface 112D is used to connect wired earphones. The earphone interface 112D may be a USB interface 130, or a standard interface of an open mobile terminal platform (OMTP) of 3.5 mm, or a standard interface of the Cellular Telecommunications Industry Association (CTIA) of the USA.

The sensor module 115 may include a pressure sensor, a gyroscope sensor, a pneumatic sensor, a magnetic sensor, an acceleration sensor, a distance sensor, a proximity light sensor, a fingerprint sensor, a temperature sensor, an ambient light sensor, and a bone conduction sensor.

Of course, the electronic device 110 may also include a charging management module, a power management module, a battery, a button, an indicator, and one or more interfaces of SIM cards, etc., which is not limited in the embodiments of the preset application.

In some other embodiments, as shown in FIG. 2, the sensor module 115 may include a touch sensor. The touch sensor may collect the user's touch events (e.g., the user's operations on a surface of the touch sensor with fingers, stylus, etc.) on or close to the touch sensor, and send the collected touch information to other devices, such as the processor 111.

For example, the touch sensor may be realized in a form of resistance, capacitance, infrared light or surface acoustic wave. The touch sensor and the display 116 may be integrated to form a touch screen of the electronic device 110, or, the touch sensor and the display 116 may be used as two separate components to realize the input and output functions of the electronic device 110.

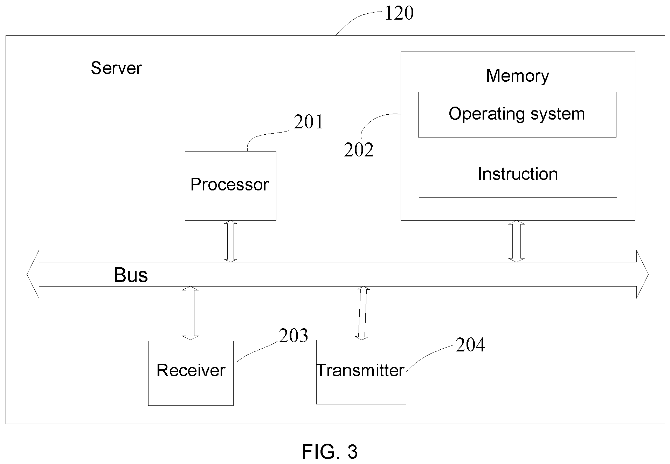

FIG. 3 is a structural diagram of the server in FIG. 1, in accordance with some embodiments of the present disclosure.

In some embodiments, the server 120 shown in FIG. 3 may include at least one processor 201 and a memory 202.

The processor(s) 201 may be one or more general central processing units (CPUs), microprocessors, application-specific integrated circuits (ASICs), or integrated circuits used to control program executions in some embodiments of the present disclosure. The CPUs may be single central processing units (single-CPUs), or multi central processing units (multi-CPUs). A processor 201 herein may refer to one or more devices, circuits, or processing cores used to process data (e.g., computer program instructions).

The memory 202 may store an operating system and instructions (e.g., computer instructions), and include, but is not limited to, a random access memory (RAM), a read only memory (ROM), an erasable programmable read-only memory (EPROM), a flash memory, or an optical memory. Codes of the operating system are stored in the memory 202.

For example, the processor 201 reads the instructions stored in the memory 202 to enable the server 120 to implement a question answering method in the following embodiments and output the target answer corresponding to the text to be answered. Or, the processor 201 enables, through instructions stored therein, the server 120 to implement the question answering method in the following embodiments and output the target answer corresponding to the text to be answered. In a case where the processor 201 implements the question answering method in the following embodiments by reading the instructions stored in the memory 202, the instructions for implementing the question answering method provided by the embodiments are stored in the memory 202.

In some other embodiments, the server 120 in FIG. 3 may further include a receiver 203 and a transmitter 204.

The receiver 203 is configured to receive the request including the question to be answered that is input by the electronic device. For example, the receiver 203 may be communicatively connected to a routing device in a wired or wireless communication manner, and receive the request including the question to be answered sent by the routing device.

The transmitter 204 may be communicatively connected to the electronic device 110 in a wired or wireless communication manner, and is configured to send the target answer corresponding to the text to be answered to the electronic device 110.

It will be noted that, the electronic device 110 may be a terminal described in the following embodiments.

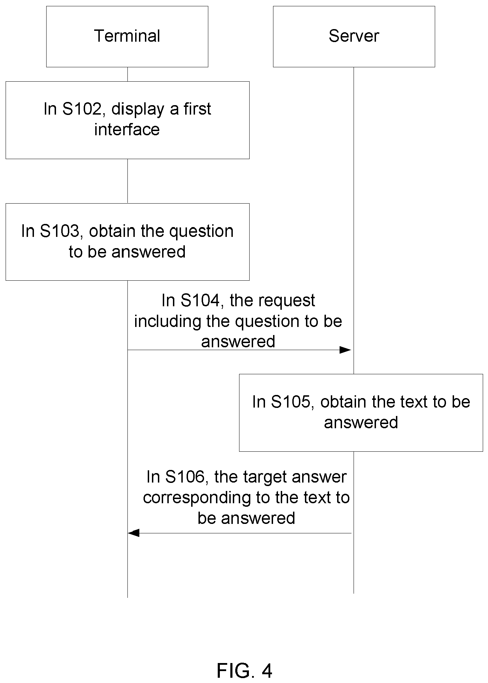

As shown in FIG. 4, based on the system architecture shown in FIG. 1, the embodiments provide a question answering system whereby the question answering method described in the following embodiments may be implemented. The question answering method may include steps 101 to 106 (S101 to S106).

In S101, a user logs in to the question answering system.

For example, the user may log in to the question answering system by inputting a network link corresponding to the question answering system in a browser installed on the terminal.

As another example, the user may log in to the question answering system through an application program. The application program may be an application program including the question answering system.

In S102, the terminal displays a first interface after the user logs in to the question answering system.

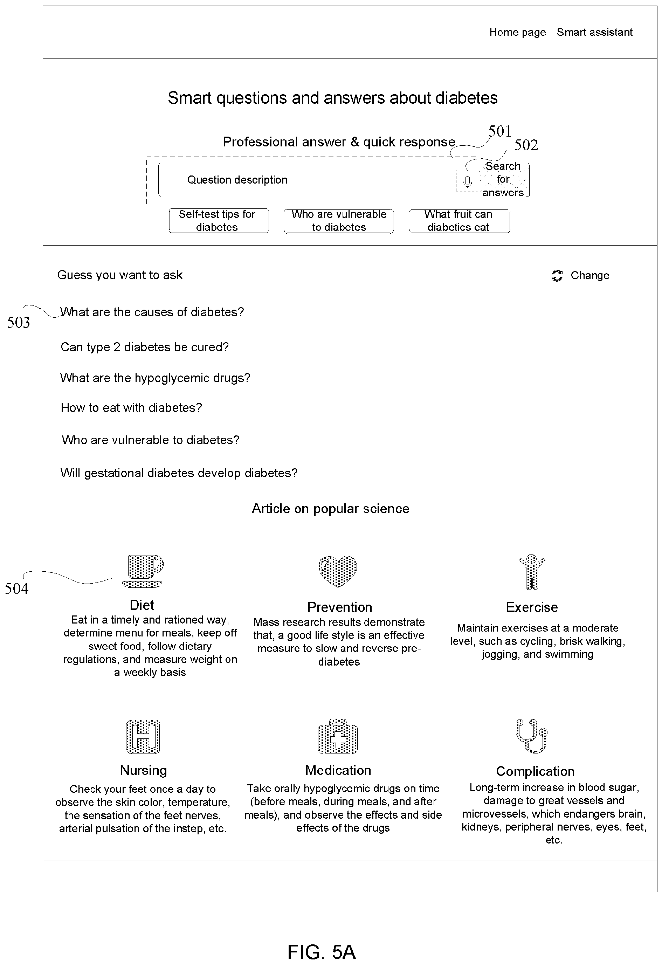

As shown in FIG. 5A, the first interface may include at least one of a search input box 501 and a voice input control 502, a "Smart questions and answers about diabetes" module, a "Guess you want to ask" module, and an "Article on popular science" module.

For example, the first interface may be presented by the browser or the application program installed on the terminal. As shown in FIG. 5A, the first interface includes the search input box 501 and the voice input control 502.

In some embodiments, after the user logs in to the question answering system, the question answering method may further include step 201 (S201) described below before the terminal obtains the question to be answered.

In S201, the server outputs at least one second preset question text to the terminal according to a preset question screening condition. Correspondingly, the first interface of the terminal displays the at least one second preset question text.

The second preset question is unrelated to the text to be answered.

For example, after the user logs in to the question answering system, that is, after the server receives an online notification from the terminal and before the server obtains the request including the question to be answered sent by the terminal, the server may output the at least one second preset question text to the terminal according to the preset question screening condition.

In some embodiments, S201 may be specifically implemented through the following step 201a (S201a) or step 201b (S201b).

In S201a, the server obtains a number of clicks of a plurality of preset question texts that, and according to a descending order of the number of clicks, outputs at least one preset question text top ranked in the plurality of preset question texts as the second preset question text for output. Correspondingly, the second preset question text is output on the first interface of the terminal.

For example, the plurality of preset question texts and the number of clicks corresponding to the plurality of preset question texts are stored in a database, and the server may obtain the number of clicks corresponding to the plurality of preset question texts, respectively, and according to the descending order of the number of clicks, output the at least one preset question text (one or more preset question texts) top ranked in the plurality of preset question texts as the second preset question text(s).

For example, as shown in FIG. 5A, six preset question texts 503 top ranked in the plurality of preset question texts are output on the first interface of the terminal.

In S201b, the server outputs the at least one second preset question text according to at least one of an application scenario, current time and weather.

The application scenario may be office scenario, outdoor scenario, and the like.

For example, if the current time is the beginning of winter, the server may output at least one second preset question text related to the beginning of winter, according to the current time. For example, the second preset question text may be "How do diabetics exercise in winter?". As another example, the second preset question text may be "How to nurse the diabetics in winter?". In this way, it is possible to recommend questions to users in a personalized and accurate manner, according to change of time, thereby improving stickiness of users.

In some embodiments, in a case where the first interface includes the second preset question text 503, the terminal may output a preset answer text corresponding to the second preset question text in response to the user's fourth operation (e.g., click for input) for the second preset question text.

For example, as shown in FIG. 5A, the first interface includes six second preset question texts, which are "What are the causes of diabetes?", "Can type 2 diabetes be cured?", "What are the hypoglycemic drugs?", "How to eat with diabetes?", "Who are vulnerable to diabetes?" and "Will gestational diabetes develop diabetes?". In a case where the user wants to know about the related content of the causes of diabetes, that is, the second preset question text is "What are the causes of diabetes?", the user may click the second preset question text, so that the terminal outputs the preset answer text corresponding to the second preset question text on the display of the terminal in response to the click for input, and the user obtains the preset answer text.

It will be noted that, if the user is not satisfied with the second preset question text, the user may change the second preset question text by clicking a "Change" button shown in FIG. 5A.

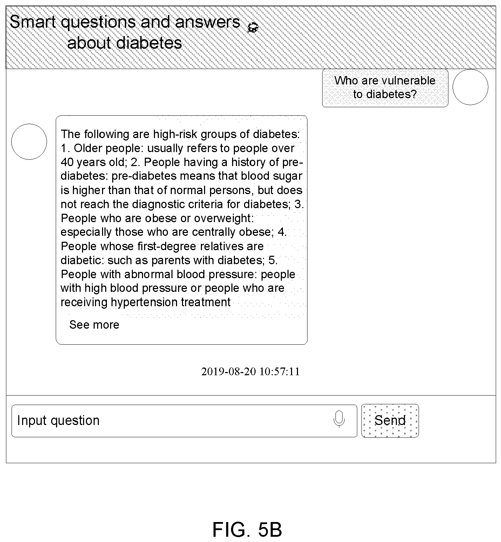

In some embodiments, the user may also click a "Smart assistant" button as shown in FIG. 5B, so that the interface jumps to what is shown in an interface diagram of the smart assistant as shown in FIG. 5B. In the interface diagram, the user may also input the question to be answered in a manner of voice or text, and at the same time, a chat log is also saved in the interface of the smart assistant.

In some other embodiments, after the user logs in to the question answering system, the question answering method may further include step 202 (S202) described below before the terminal obtains the question to be answered.

In S202, the server outputs at least one second article link according to a preset article screening condition.

The preset article screening condition is unrelated to the text to be answered.

For example, after the user logs in to the question answering system, that is, after the server receives the online notification from the terminal and before the server obtains the request including the question to be answered sent by the terminal, the server outputs the at least one second article link according to the preset article screening condition.

In some embodiments, S202 may be specifically implemented through the following step 202a (S202a) or step 202b (S202b).

In S202a, the server obtains a number of clicks of a plurality of article links, and according to a descending order of the number of clicks, uses at least one article link top ranked in the plurality of article links as the second article link(s).

For example, the plurality of article links and the number of clicks corresponding to the plurality of article links are stored in the database, and the server obtains the number of clicks of the plurality of article links, and according to the descending order of the number of clicks, outputs at least one article link top ranked in the plurality of article links as the second article link(s).

In S202b, the server outputs the at least one second article link according to at least one of the application scenario, the current time and the weather.

For example, if the current time is the beginning of winter, the server may output at least one second article link related to the beginning of winter according to the current time.

In some embodiments, in a case where the first interface includes an article category identifier 504, the terminal may output at least one article link corresponding to the article category identifier in response to the user's fifth operation (e.g., click for input) for the article category identifier 504.

For example, as shown in FIG. 5A, the first interface includes six article category identifiers, which are "Diet", "Prevention", "Exercise", "Nursing", "Medication" and "Complication", respectively. If the user wants to know about the related content of diet, that is, in a case where the article category identifier is "Diet", the user may click on the article category identifier "Diet", so that the terminal outputs at least one second article link corresponding to the article category identifier "Diet" on the display of the terminal in response to the click for input.

It will be noted that, in FIG. 5A, a description is made by taking an example in which the first interface includes the second preset question texts and the article category identifiers. In practical application, the first interface may include at least one of the second preset question texts and the article category identifiers.

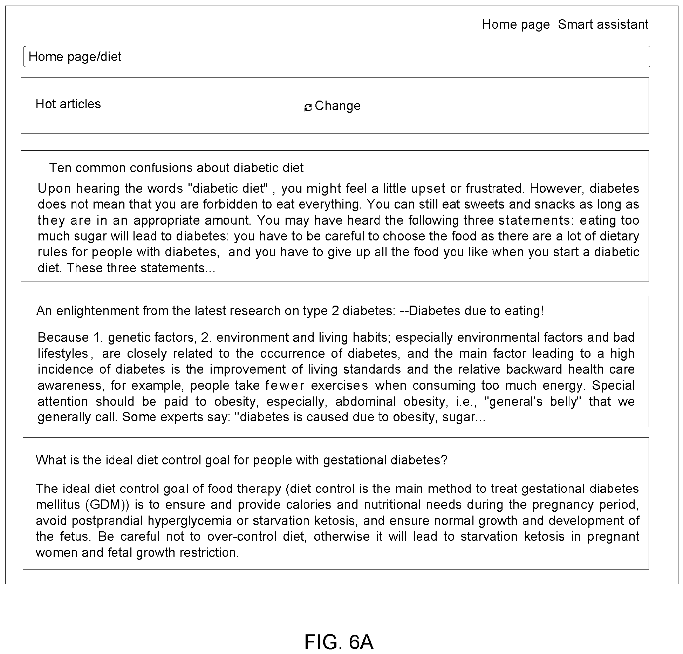

In the embodiments, after the server outputs the at least one second article link according to the preset article screening condition, the terminal may output at least one second article link corresponding to different article category identifiers as shown in FIGS. 6A to 6F in response to the user's fifth operation for the article category identifier.

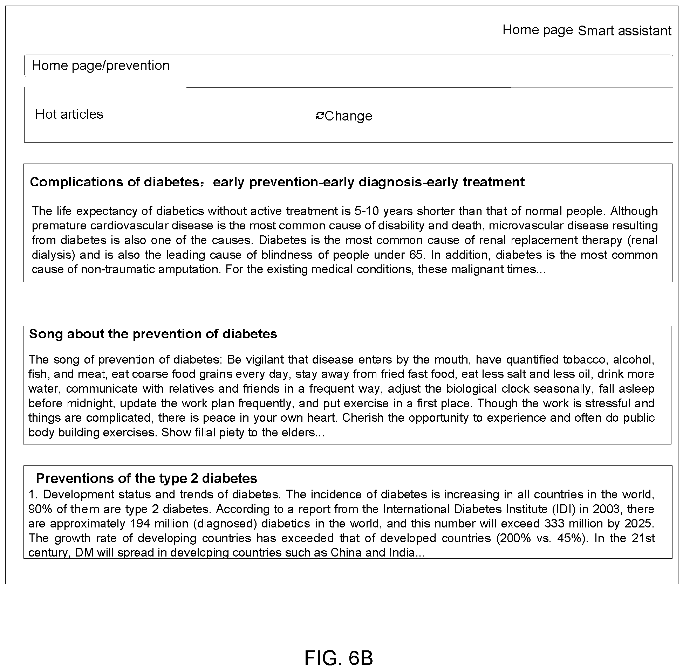

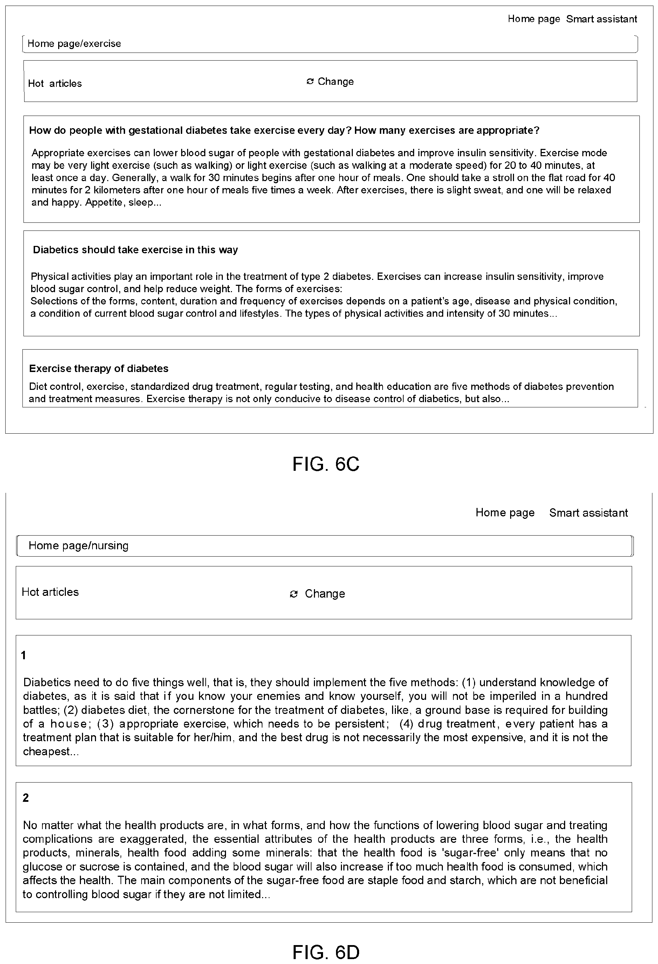

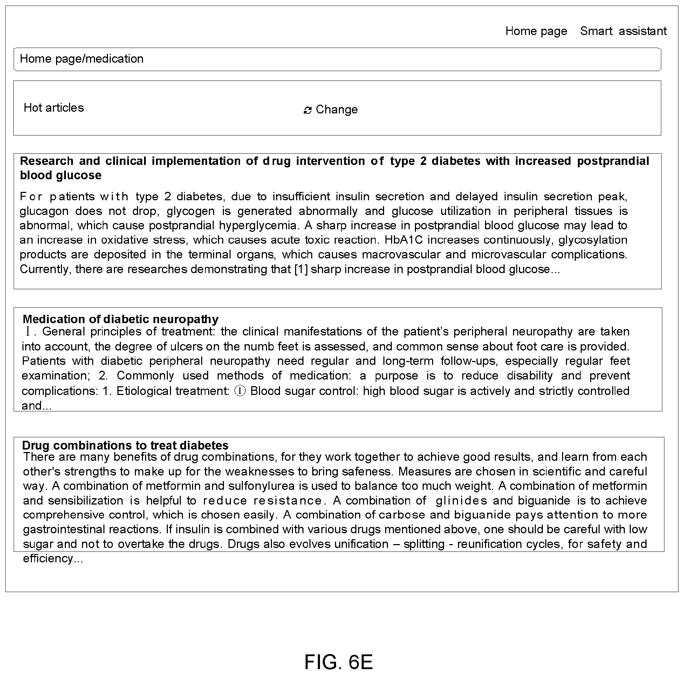

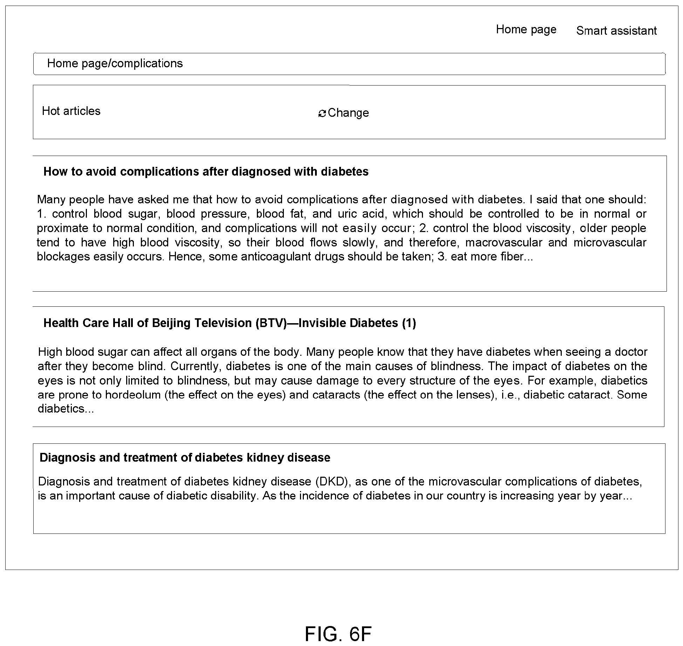

For example, FIG. 6A shows at least one second article link corresponding to the article category identifier "Diet"; FIG. 6B shows at least one second article link corresponding to the article category identifier "Prevention", FIG. 6C shows at least one second article link corresponding to the article category identifier "Exercise", FIG. 6D shows at least one second article link corresponding to the article category identifier "Nursing", FIG. 6E shows at least one second article link corresponding to the article category identifier "Medication", and FIG. 6F shows at least one second article link corresponding to the article category identifier "Complication".

In S103, the terminal obtains the question to be answered in response to the user's first operation on the first interface.

The question to be answered includes a question to be answered in text form or a question to be answered in voice form. For example, on the first interface shown in FIG. 5A, after clicking on the search input box 501, the user may input the question that he or she wants to know (i.e., the question to be answered) to the search input box 501 in text form, so that the terminal obtains the question to be answered in text form. The question to be answered in text form is the text to be answered described below.

As another example, on the first interface as shown in FIG. 5A, the user may speak out a question that he or she wants to know after clicking on the voice input control 502, so that the terminal obtains the question to be answered in voice form.

It will be noted that, the embodiments do not limit a method for the terminal to obtain the question to be answered in voice form. For example, the terminal may obtain the question to be answered in voice form through an APP (application), a WeChat mini program, a WEB browser, etc.

In S104, the terminal sends the request including the question to be answered to the server; and correspondingly, the server obtains the request including the question to be answered sent by the terminal.

In S105, the server obtains the text to be answered according to the request sent by the terminal. In some embodiments, in a case where the question to be answered is in voice form, the server may convert the question to be answered into the text to be answered using voice recognition.

Specifically, the question to be answered in voice form may be converted into the text to be answered using voice recognition software provided by iFlytek or Baidu.

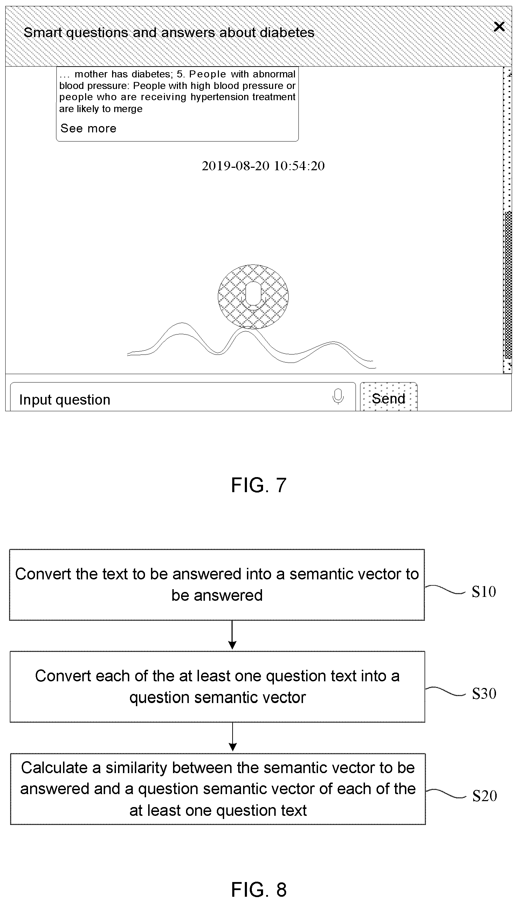

For example, the user may input the question to be answered through speech after the terminal displays an interface diagram as shown in FIG. 7, and after obtaining the question to be answered in voice form, the terminal may convert the question to be answered in voice form into the text to be answered through iFlytek.

In some embodiments, after the server obtains the text to be answered, the question answering method may further include steps 301 and 302 (S301 and S302) described below.

In S301, the server obtains priorities of the plurality of preset question texts according to the text to be answered.

In S302, the server outputs at least one first preset question text according to the priorities of the plurality of preset question texts. Correspondingly, the terminal displays a second interface that includes a first preset question text.

Each first preset question text is one of the plurality of preset question texts.

In the embodiments, a sorting order of the preset question texts on the second interface is proportional to the priorities of the preset question texts.

For example, if the user inputs the text to be answered on the first interface, the server may know about the user's preference according to the text to be answered and thus output at least one first preset question text according to the user's preference. Correspondingly, the first preset question text is output on the second interface of the terminal. In this way, questions may be recommended to the user in a personalized and accurate manner, thereby improving stickiness of users.

In some embodiments, the S301 may be specifically implemented by step 301a (S301a), step 301b (S301b), or step 301c (S301c).

In S301a, the server obtains similarities between the plurality of preset question texts and the text to be answered, and determines the priorities of the plurality of preset question texts according to the similarities.

A similarity is proportional to a priority.

In S301b, the text to be answered includes at least one keyword, the similarities between the plurality of preset question texts and the at least one keyword are obtained, and the priorities of the plurality of preset question texts are determined according to the similarities.

In the embodiments, the similarities between the plurality of preset question texts and the text to be answered, and the similarities between the plurality of preset question texts and the at least one keyword may be obtained through a clustering analysis algorithm. The higher the obtained similarity is, the higher the priority is, and the lower the similarity is, the lower the priority is. Specifically, the clustering analysis is performed through a latent Dirichlet analysis method.

It will be understood by those skilled in the art that, the purpose of the clustering analysis is to classify things with similar characteristics into one category. Since the clustering analysis is well known to those skilled in the art, it will not be repeated herein.

In S301c, the server obtains degrees of association between the plurality of preset questions and the text to be answered, and determines the priorities of the plurality of preset question texts according to the degrees of association.

The priority is proportional to a degree of association.

In the embodiments, the degrees of association between the plurality of preset questions and the text to be answered may be obtained using an association rule algorithm.

It will be understood by those skilled in the art that, the association rule algorithm is an unsupervised and rule-based machine learning algorithm, and is able to dig into strong association between the preset question text and the text to be answered. Support is used to measure a proportion that a certain itemset appears in a whole dataset, and confidence is used to measure a probability that some other things will inevitably happen when something happens. A recursive method is used to find all the itemsets, and smallest support and smallest confidence are used to find the itemsets with strong association in all the itemsets, so that a function of recommendation is achieved.

It will be noted that, since the association rule algorithm is well known to those skilled in the art, it will not be repeated herein.

In some embodiments, in a case where the second interface of the terminal includes the first preset question text, the terminal may output a preset answer text corresponding to the first preset question text in response to the user's second operation for the first preset question text.

In some other embodiments, after the server obtains the text to be answered, the question answering method may further include step 303 (S303) described below.

In S303, the server outputs at least one first article link related to the text to be answered.

It will be noted that, compared with a second article link, a first article link is an article link provided according to the user's preference after the server obtains the text to be answered.

In some embodiments, in a case where the second interface includes an article category identifier, the terminal may output at least one first article link corresponding to the article category identifier in response to the user's third operation for the article category identifier.

In some embodiments, after the question to be answered in voice form is converted into the text to be answered using voice recognition, the question answering method may further include:

performing a first pre-treatment for the text to be answered.

The first pre-treatment includes at least one of word segmentation, removal of stop words, part-of-speeches tagging, and synonym extension.

It will be noted that, before the performing a first pre-treatment for the text to be answered, the question answering method also includes building a stop word dictionary and a synonym word set. The stop word dictionary includes auxiliary words, punctuation marks, special characters, and function words. The synonym word set is a set of words with the same semantic meaning. For example, since the synonyms of "diabetes" are "DM", "diabetes mellitus", etc., in the synonym word set, the words "diabetes", "DM", and "diabetes mellitus" are included.

Jieba Chinese word segmentation tool is used to segment words and number every word, so as to ensure that a same word in different sentences has a same number, so that the word may be searched according to its number.

A natural language toolkit (NLTK) may be used to tag part of speech of a word.

A process of the first pre-treatment is that, when the word segmentation is performed for the text to be answered, the stop words are removed according to the stop word dictionary, and at a same time, part of speeches are tagged, and a synonym dictionary is loaded for synonym extension.

In addition, when the first pre-treatment is performed, the International Classification of Diseases (ICD-10), a food dictionary, a symptom dictionary, etc. are also required to be loaded simultaneously.

In the embodiments of the present disclosure, after the server obtains the text to be answered, the question answering method further includes step 106 (S106) described below.

In S106, the server outputs the target answer corresponding to the text to be answered.

The target answer includes a multimedia file corresponding to a semantic answer text or a multimedia file corresponding to a suggestion answer text, and a multimedia file includes at least one of a text, a voice file and a video file.

Specifically, after obtaining the text to be answered, the server may output the target answer corresponding to the text to be answered through a method for determining a text similarity, a method for obtaining a semantic answer text, and the question answering method described below.

The method for determining the text similarity, the method for obtaining the semantic answer text, and the question answering method will be described in detail below.

Some embodiments of the present disclosure provide a method for determining a text similarity. As shown in FIG. 8, the method for determining the text similarity includes steps 10 and 20 (S10 and S20) described below.

In S10, the server converts the text to be answered into a semantic vector to be answered.

Specifically, the text to be answered may be converted into the semantic vector to be answered by a question answering model.

The text to be answered includes at least one word (one or more words) to be answered. In an example in which the text to be answered is that "Can diabetics eat potatoes?", the text to be answered includes two words to be answered, which are "diabetics" and "potatoes", respectively.

In S20, the server calculates a similarity between the semantic vector to be answered and a question semantic vector of each of the at least one question text.

Each similarity is a text similarity between the text to be answered and a question text.

The embodiments of the present disclosure provide the method for determining the text similarity, which converts the text to be answered into the semantic vector to be answered through a question answering model, and calculates the similarity between the semantic vector to be answered and the question semantic vector of each of the at least one question text, and the similarity is a text similarity between the semantic text to be answered and a question text. Since the question answering model has high accuracy, and may determine a question text corresponding to the text to be answered according to the calculated text similarity, an accuracy of solving a user's problem in the subsequent question answering method may be improved.

In some other embodiments, as shown in FIG. 8, the method for determining the text similarity may further include step 30 (S30) described below.

In S30, each of the at least one question text is converted into a question semantic vector.

Each question text includes at least one question word.

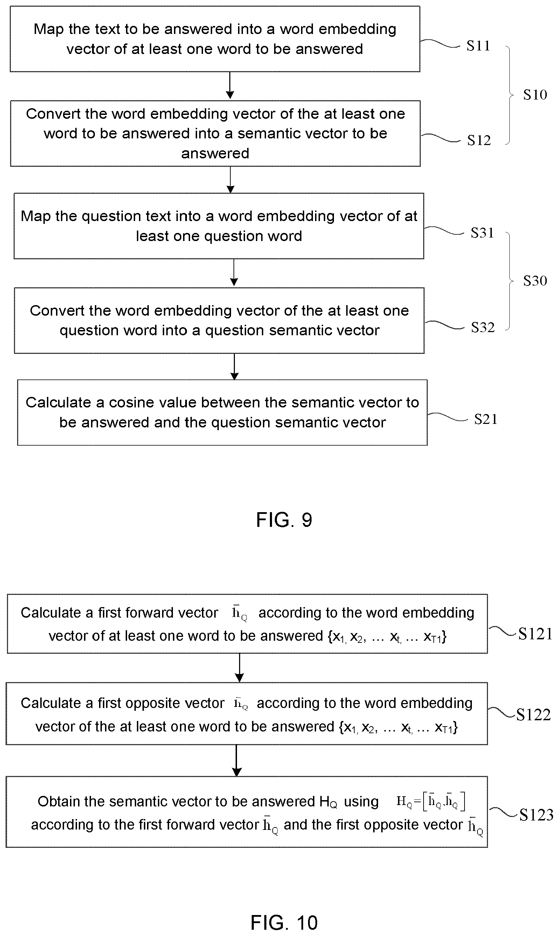

In some embodiments, as shown in FIG. 9, in S10, that the server converts the text to be answered into a semantic vector to be answered may be specifically implemented through steps 11 and 12 (S11 and S12) described below.

In S11, the text to be answered is mapped into a word embedding vector of at least one word to be answered.

Specifically, a pre-trained word vector model may be used to map the text to be answered into the word embedding vector of the at least one word to be answered.

The pre-trained word vector model may adopt Tencent_AILab_ChineseEmbedding.tar.gz, which is a large-scale, high-quality Chinese word vector dataset released by Tencent AI Lab, and the pre-trained word vector model includes eight million Chinese words, and dimensions of each word vector are 200. Since the dimensions of each word vector are 200, and the text to be answered includes at least one word to be answered, the text to be answered may be converted into a matrix through the pre-trained word vector model.

In S12, the word embedding vector of the at least one word to be answered is converted into a semantic vector to be answered.

Specifically, the word embedding vector of the at least one word to be answered may be converted into the semantic vector to be answered using a first neural network. The first neural network may be a convolutional neural network (CNN), a recurrent neural network (RNN), a long short-term memory (LSTM) network, etc.

It will be understood by those skilled in the art that, the LSTM is a network structure for dealing with a vanishing gradient problem and an exploding gradient problem in a training process of long sequences, and is well performed for the long sequences.

There are three gate structures in the LSTM, which are a forget gate, an input gate, and an output gate, and a transmission state is controlled by a gate control state. A transmission of the LSTM mainly includes three stages. A first stage is a forgetting stage, which may selectively forget the input information transmitted by a previous node; a second stage is a selective memory stage, which may selectively memorize the input information in the current stage; and the third stage is an output stage, which determines output information in a current state.

Based on a single-direction training of the LSTM, a bi-directional long short-term memory (BI-LSTM) network structure may perform the training using front-to-rear (forward) information and rear-to-front (reverse) information, so as to make the output more accurate.

In the embodiments of the present disclosure, parameters of the bi-directional long short-term memory network structure may be set as follows: a batch size is 64, a learning rate is 0.01, and dimensions of a word vector are 200. In a small batch random gradient descent method, a dropout of 0.1 used, a number of layers of a bi-directional long short-term memory network model is three, a number of nodes of a hidden layer is 50, and a number of iterations is 500.

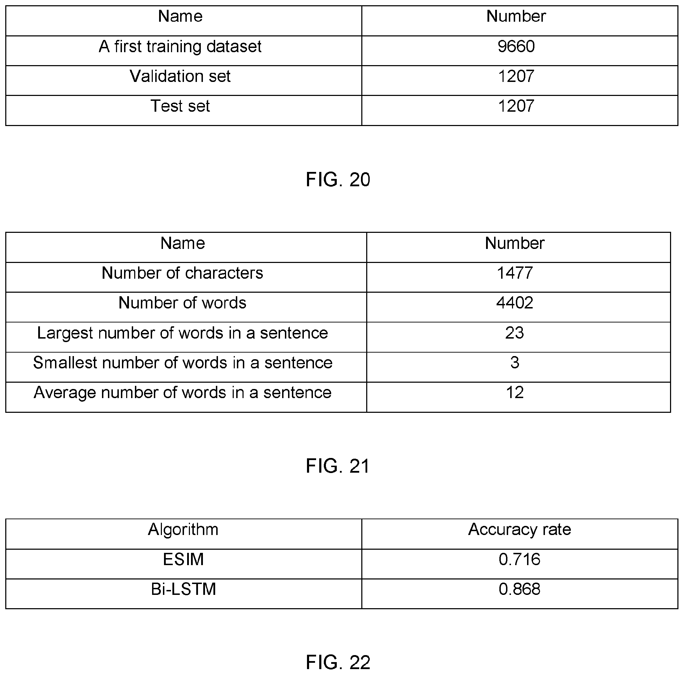

Before S11, based on the word embedding vector, a test set is used to compare accuracy rates of the bi-directional long short-term memory network model and an ESIM model (natural language understanding model). As shown in FIG. 22, an accuracy rate calculated using the bi-directional long short-term memory network model is 0.868, and an accuracy rate calculated using the ESIM is 0.716. Since the accuracy rate of the bi-directional long short-term memory network model is increased by 15.2% compared with the accuracy rate of the ESIM, the embodiments of the present disclosure adopt the bi-directional long short-term memory network model with a higher accuracy rate.

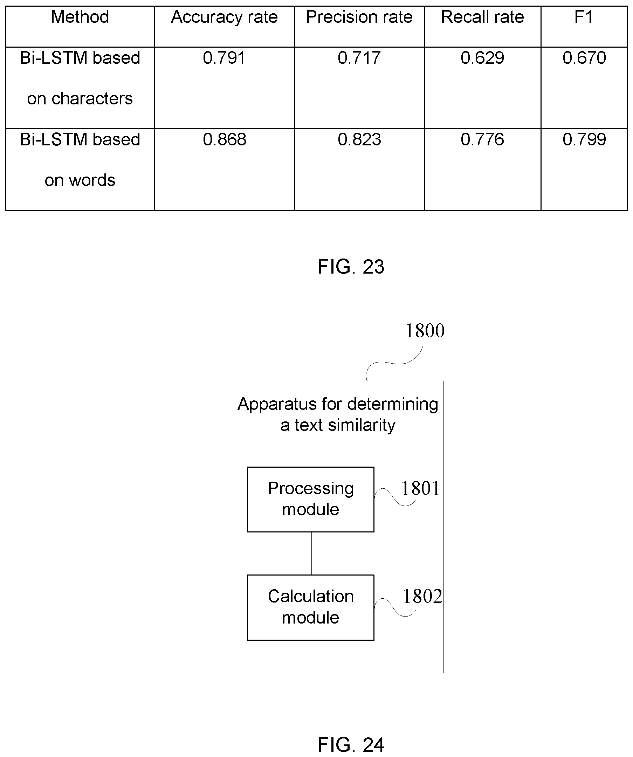

There is a word embedding method based on words and a character embedding method based on characters in Chinese. As shown in FIG. 23, the accuracy rate corresponding to the bi-directional long short-term memory network model based on characters is calculated to be 0.791, a precision rate thereof is 0.717, a recall rate thereof is 0.629, and an F1-measure thereof is 0.670; whereas the accuracy rate corresponding to the bi-directional long short-term memory network model based on words is 0.868, a precision rate thereof is 0.823, a recall rate thereof is 0.776, and an F1-measure thereof is 0.799. Since evaluation indicators of the bi-directional long short-term memory network model based on words are all superior to evaluation indicators of the bi-directional long short-term memory network model based on characters, the embodiments of the present disclosure adopt the bi-directional long short-term memory network model based on words.

In some embodiments, as shown in FIG. 9, S30 may be specifically implemented through steps 31 and 32 (S31 and S32) described below.

In S31, the question text is mapped into a word embedding vector of at least one question word.

Specifically, the question text may be mapped into the word embedding vector of the at least one question word using the pre-trained word vector model.

An explanation of the pre-trained word vector model may be referred to the description of the above embodiments, and will not repeated herein.

In S32, the word embedding vector of the at least one question word is converted into a question semantic vector.

Specifically, the word embedding vector of the at least one question word may be converted into the question semantic vector using a second neural network. The second neural network may also be a neural network such as CNN, RNN, or LSTM.

It will be noted that, the first neural network and the second neural network constitute siamese networks. The first neural network and the second neural network have a same structure and share weights.

In some embodiments, as shown in FIG. 10, S12 may be specifically implemented through steps 121, 122 and 123 (S121, S122 and S123) described below.

In S121, a first forward vector is calculated according to the word embedding vector of the at least one word to be answered $\{x_1, x_2, ... x_t, x_{T1}\}$, $\vec{h}_Q=(\vec{h}_1,\vec{h}_2,...\vec{h}_t,...\vec{h}_{T1})$, $t \in \{1,\cdots,T1\}$; and $\vec{h}_Q$ and $\{x_1, x_2, ... x_t, ... x_{T1}\}$ satisfy a first set of relations.

In S122, a first opposite vector is calculated and expressed as $\overleftarrow{h}_Q$ according to the word embedding vector of the at least one word to be answered $\{x_1, x_2, ... x_t, ... x_{T1}\}$, $\overleftarrow{h}_Q = (\overleftarrow{h}_1,\overleftarrow{h}_2, \cdots\overleftarrow{h}_t ..., \overleftarrow{h}_{T1})$; and $\overleftarrow{h}_Q$ and $\{x_1, x_2, ... x_t, ... x_{T1}\}$ satisfy a second set of relations.

In S123, the semantic vector to be answered $H_Q$ is obtained through $H_Q=[\vec{h}_Q,\overleftarrow{h}_Q]$, according to the first forward vector $\overleftarrow{h}_Q$ and the first opposite vector $\overleftarrow{h}_Q$.

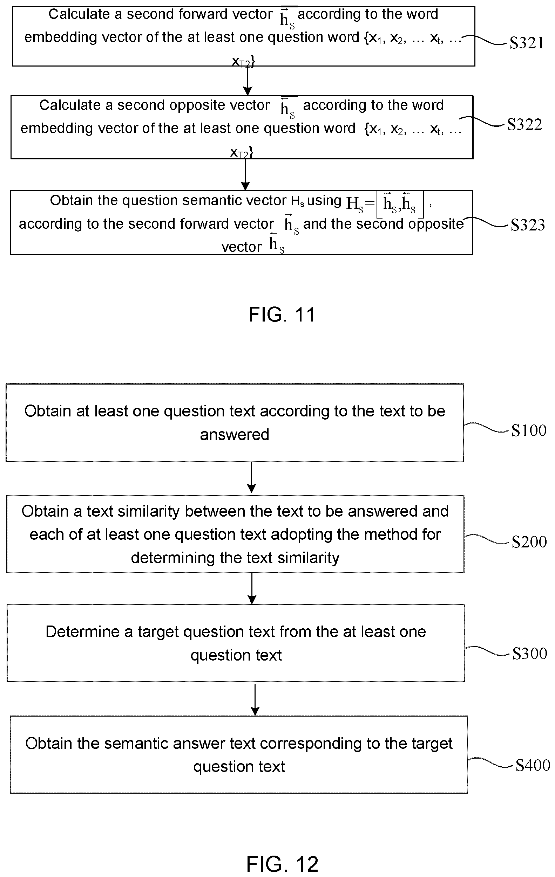

In some embodiments, as shown in FIG. 11, S32 may be specifically implemented through steps 321, 322 and 323 (S321, S322 and S323) described below.

In S321, a second forward vector $\vec{h}_s$ is calculated according to the word embedding vector of the at least one question word $\{x1, x2, ... xt, ... xT2\}$.

$\vec{h}s=(\vec{h}_1,\vec{h}_2, \cdots \vec{h}_t, \cdots \vec{h}_{T2})$, $t \in \{1,\cdots,T2\}$, and $\vec{h}_s$ and $\{x_1, x_2, \dots x_t, \dots x_{T1}\}$ satisfy the first set of relations.

In S322, a second opposite vector $\overleftarrow{h}_s$ is calculated according to the word embedding vector of the at least one question word $\{x_1, x_2, \dots x_t, \dots x_{T2}\}$.

$\overleftarrow{h}_s$ and $\{x_1, x_2, \dots x_t, \dots x_{T2}\}$ satisfy the second set of relations.

In S323, the question semantic vector $H_s$ is obtained using $H_s=[\vec{h}_s,\overleftarrow{h}_s]$ according to the second forward vector $\vec{h}_s$ and the second opposite vector $\overleftarrow{h}_s$.

The first set of relations includes:

$$i_t=\text{sigmoid}(W_i x_t+U_i\vec{h}_{t-1}+b_i)$$ ;

$$f_t=\text{sigmoid}(W_f x_t+U_f\vec{h}_{t-1}+b_f)$$ ;

$$\tilde{c}_t=\tanh(W_c x_t+U_c\vec{h}_{t-1}+b_c)$$ ;

$$c_t=i_t \times \tilde{c}_t+f_t \times c_{t-1}$$ ;

$$o_t=\text{sigmoid}(W_o x_t+U_o\vec{h}_{t-1}+b_o)$$ ;

$$\vec{h}_t=o_t \times \tanh(c_t)$$ ;

and
the second set of relations includes:

$$i_t=\text{sigmoid}(W_i y_t+U_i\overleftarrow{h}_{t+1}+b_i)$$ ;

$$f_t=\text{sigmoid}(W_f y_t+U_f\overleftarrow{h}_{t+1}+b_f)$$ ;

$$\tilde{c}_t=\tanh(W_c y_t+U_c\overleftarrow{h}_{t+1}+b_c)$$ ;

$$c_t=i_t \times \tilde{c}_t+f_t \times c_{t+1}$$ ;

$$o_t=\text{sigmoid}(W_o y_t+U_o\overleftarrow{h}_{t+1}+b_o)$$ ;

$$\overleftarrow{h}_t=o_t \times \tanh(c_t)$$ ;

i is the input gate, f is the forget gate, o is the output gate, c is a memory unit, $\tilde{c}$ is a temporary memory unit, Wi, Wf, Wc, Wo, Ui, Uf, Uc and Uo are weight matrices, bi, bf, bc and bo are bias vectors, and t represents a word embedding vector of a t-th word to be answered or a word embedding vector of a t-th question word.

It will be noted that, in a case where an error parameter is greater than an error threshold, adjusting model parameters of the question answering model refers to adjusting the weight matrices Wi, Wf, Wc, Wo, Ui, Uf, Uc and Uo and the bias vectors bi, bf, bc and bo.

It will be understood by those skilled in the art that, the sigmoid function is an activation function, and tanh is a hyperbolic tangent activation function.

In some embodiments, S20 may be specifically implemented through step 21 (S21) or step 22 (S22) described below.

In S21, a cosine value between the semantic vector to be answered and the question semantic vector is calculated, and the cosine value is used as a text similarity between the semantic vector to be answered and the question semantic vector.

The cosine value satisfies the following condition: $\cos\theta = \dfrac{H_Q H_S}{\|H_Q\|\|H_S\|}$ , $\cos\theta$ is the cosine value, $H_Q$ is the semantic vector to be answered, and $H_S$ is the question semantic vector.

It will be noted that, the cosine value is in a range from -1 to 1. If the cosine value approaches more closely 1, it means that a direction of the semantic vector to be answered is more close to a direction of the question semantic vector. If the cosine value approaches more closely -1, it means that the direction of the semantic vector to be answered is more opposite to the direction of the question semantic vector. If the cosine value approaches 0, it means that the semantic vector to be answered is substantially orthogonal to the question semantic vector.

In S22, the cosine value between the semantic vector to be answered and the question semantic vector is calculated, the cosine value is converted into the text similarity between the semantic vector to be answered and the question semantic vector, and there is a functional relationship of increasing function between the text similarity between the semantic vector to be answered and the question semantic vector and the cosine value.

The increasina function is $Sim_{BiLSTM\text{-}Siamese}(Q,S)=0.5+0.5\cos\theta$ , and $Sim_{BiLSTM\text{-}Siamese}(Q,S)$ is the text similarity.

Specifically, the cosine value is normalized to be between 0 and 1 using the increasing function $Sim_{BiLSTM\text{-}Siamese}(Q,S)=0.5+0.5\cos\theta$ , and the text similarity between the semantic vector to be answered and the question semantic vector is obtained as $Sim_{BiLSTM\text{-}Siamese}(Q,S)$.

The greater the text similarity is, the greater the similarity between the text to be answered corresponding to the semantic vector to be answered and the question text corresponding to the question semantic vector is.

Based on this, the embodiments of the present disclosure further provide a method for obtaining a semantic answer text. As shown in FIG. 12, the method for obtaining the semantic answer text includes steps 100 to 400 (S100 to S400) described below.

In S100, at least one question text is obtained according to the text to be answered.

In S200, a text similarity between the text to be answered and each of at least one question text is obtained adopting the method for determining the text similarity as described above.

In S300, a target question text is determined from the at least one question text.

The text similarity between the text to be answered and the target question text satisfies a preset condition.

In some embodiments, the preset condition may be a similarity threshold, and a question text matching the text similarity is obtained when the text similarity is greater than the similarity threshold.

For example, if the similarity threshold is a maximum value of similarities of all the texts, in this case, the question text matching the maximum value of the text similarities is obtained.

If a condition of the similarity threshold is that the similarity threshold is greater than G, and in this case, question texts matching the text similarities greater than G are obtained.

If the condition of the similarity threshold is that the similarity threshold is in a range between G1 and G2, and in this case, question texts matching the text similarities between G1 and G2 are obtained.

In S400, the server obtains the semantic answer text corresponding to the target question text. Correspondingly, the terminal outputs the semantic answer text.

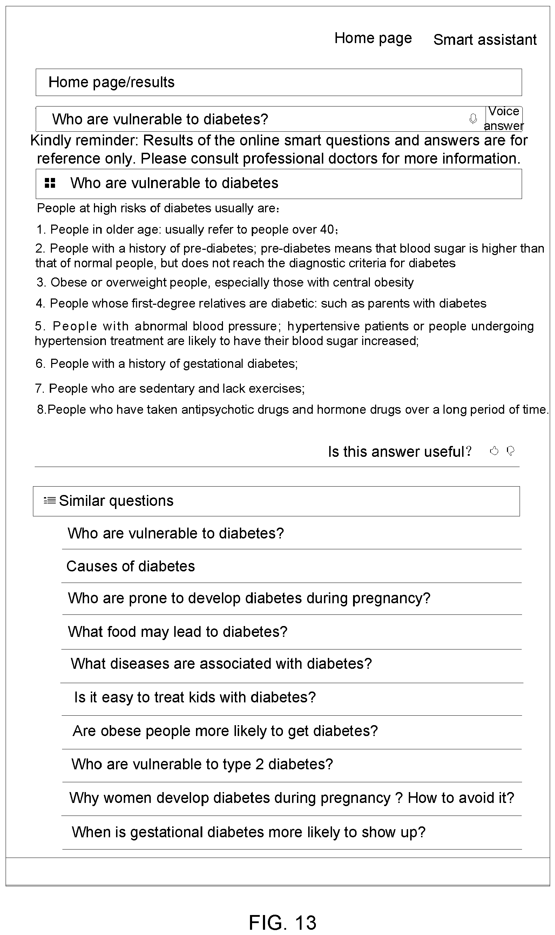

For example, as shown in FIG. 13, in a case where the text to be answered is "Who are vulnerable to diabetes?", the server may determine the text similarity between the text to be answered and each of the at least one question text, determine the target question text from the at least one question text, and obtain and output the semantic answer text corresponding to the target question text, so that the terminal outputs the semantic answer text.

In some embodiments, as shown in FIG. 13, if the user is satisfied with the output semantic answer text, he or she may click the "Like" button. If the user is not satisfied with the output semantic answer text, he or she may click the "Dissatisfied" button, and search for questions shown in a module of "Similar questions" and input the similar questions, so as to find a satisfactory semantic answer text.

Some embodiments of the present disclosure provide a question answering method. A text to be answered is obtained first; and then at least one question text is obtained according to the text to be answered, a text similarity between the text to be answered and each of at least one question text is calculated adopting the method for determining the text similarity, so that it is possible to determine whether the text similarity satisfies a preset condition. By obtaining a question text matching the text similarity that satisfies the preset condition, and further a corresponding semantic answer text is obtained according to the question text. Since the question answering model has a high accuracy rate, for the user's question to be answered, the question answering method using the question answering model may obtain the semantic answer text with a high accuracy rate.

In some embodiments, S300 may be specifically implemented through step 300a (S300a) described below.

In S300a, a second calculation similarity between the text to be answered and each of the at least one question text is calculated.

The second calculation similarity satisfies the following condition: $\text{sim}(E, F) = \alpha \text{Sim}_{\text{BiLSTM-Siamese}}(E,F) + \beta \text{Sim}_{\text{jaccard}}(E,F)$, $\text{sim}(E,F)$ is the second calculation similarity, $\text{Sim}_{\text{BiLSTM-Siamese}}(E,F)$ is the text similarity, and

$$\text{Sim}_{\text{jaccard}}(E,F) = \frac{\text{Inter}(E,F)}{\text{Union}(E,F)}$$

$\text{Sim}_{\text{jaccard}}(E,F)$ is a first calculation similarity; and , E is the text to be answered, F is the question text, Inter (E, F) represents a number of words in an intersection of the text to be answered and the question text, Union (E, F) represents a number of words in a union of the text to be answered and the question text; $\alpha$ is a weight corresponding to the text similarity; $\beta$ is a weight corresponding to the first calculation similarity; and a sum of $\alpha$ and $\beta$ is 1 ($\alpha+\beta=1$), $\alpha$ is greater than or equal to 0 and is less than or equal to 1 ($0 \leq \alpha \leq 1$), and $\beta$ is greater than or equal to 0 and is less than or equal to 1 ($0 \leq \beta \leq 1$).

For example, the number of words in the intersection of the text to be answered and the question text may be understood as a number of same words in two texts, and the number of words in the union of the text to be answered and the question text may be understood as a total number of words included in the two texts. For example, in a case where the text to be answered is "Can diabetics eat grapes?" and the question text is "What are the complications of diabetes?", the text to be answered includes two words, which are "diabetes" and "grapes", respectively. and the question text includes two words, which are "diabetes" and "complications". Comparing the text to be answered with the question text, it can be obtained that there is only one same word in the text to be answered and the question text, so Inter (E, F) is 1, and there are four words included in the text to be answered and the question text, so Union(E, F) is 4.

In the embodiments, in a case where the second calculation similarity between the text to be answered and each of the at least one question text is calculated, the preset condition satisfied by the text similarity between the text to be answered and the target question text may include a second calculation similarity between the text to be answered and the target question text being greater than the similarity threshold.

It will be noted that, the embodiments do not limit the similarity threshold. For example, the similarity threshold may be 0.8 or 0.9.

It will be noted that, the more same words in the text to be answered and the target question text, the more similar the semantic meanings expressed by the two texts, and the higher a similarity degree.

It will be understood that, by weighting the text similarity obtained on the basis of the question answering model and the first calculation similarity obtained on the basis of a Jaccard algorithm, and combining a calculation method for calculating the similar degree according to the semantic vector and a calculation method for calculating the similar degree according to a proportion of same words in all the words, the second calculation similarity may compare the similarity degree between the text to be answered and the question text in a more comprehensive way.

For example, the question to be answered obtained from the user is "Why do people get diabetes?", the question to be answered is converted into the text to be answered, and 100 questions texts are obtained according to the text to be answered. In this case, through the question answering model, the text to be answered is converted into the semantic vector to be answered, the question text is converted into the question semantic vector, and the text similarity between the semantic vector to be answered and each question semantic vector is calculated, thereby obtaining 100 text similarities.

Then, the first calculation similarity between the text to be answered and each question text is calculated, and 100 first calculation similarities will be obtained. The second calculation similarity between the text to be answered and each question text is calculated, and 100 second calculation similarities will be obtained.

Based on this, if $\alpha$ is 0.4, $\beta$ is 0.6, and the similarity threshold is 0.7, the target question text is determined from the at least one question text when the second calculation similarity is greater than 0.7.

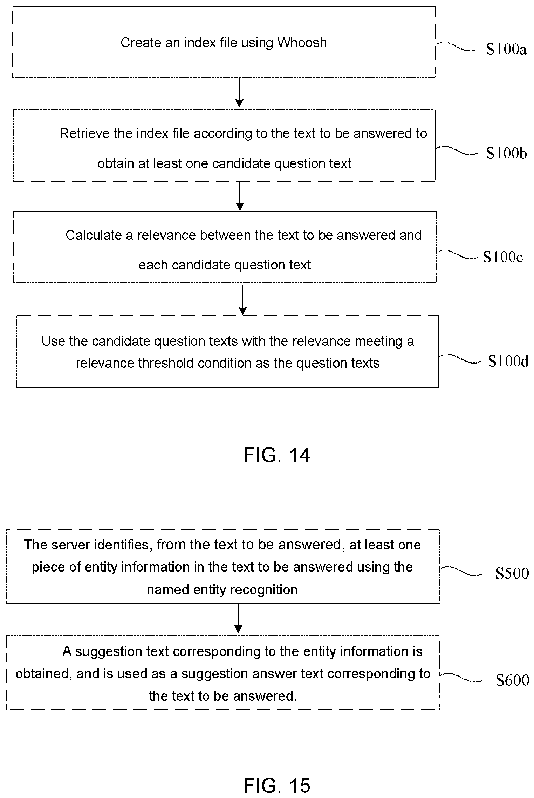

In some embodiments, as shown in FIG. 14, S100 may be specifically implemented through step 110a (S100a), step 110b (S100b), step 110c (S100c) and step 110d (S100d) described below.

In S100a, an index file is created using Whoosh.

Specifically, the index file is created using Whoosh according to a question answering knowledge base.

It will be noted that, Whoosh is a full-text search engine implemented using python. Whoosh is not only fully functional, but also has a fast response speed.

The question answering knowledge base includes fields that include a question identification number (qid) field, a question field, and an answer field.

The index file may be created based on the qid field, the question field, and the answer field, the question field and the answer field may be segmented using a Jieba word segmentation tool.

For example, the qid field may include a plurality of different question numbers, and a plurality of question texts of the question number are stored in each question number, so that the index file corresponding to the question numbers and the question texts are created.

In S110b, the index file is retrieved according to the text to be answered to obtain at least one candidate question text.

Specifically, the index file may be retrieved according to the text to be answered, and the at least one candidate question text may be obtained through Whoosh.

For example, in a case where the index file is created based on the qid field, the index file may be retrieved according to the qid field, so as to obtain the at least one candidate question text.

In S110c, a relevance between the text to be answered and each candidate question text is calculated.

Specifically, the relevance between the text to be answered and each candidate question text may be calculated using a BM25 algorithm.

A core formula of the BM25 algorithm is as follows:

$$Score_{BM25} = \sum_i^n IDF(q_i) * \frac{(k_1+1)*f_i}{f_i+k_1*\left[(1-b)+b*\left(\frac{L_d}{L_{ave}}\right)\right]} * \frac{(k_3+1)*qf_i}{k_3+qf_i}.$$

IDF is an inverse document frequency, and may be used to determine a weight of a word in the text, $k_1$, $k_3$, b are regulators, $L_d$ and $L_{ave}$ are a length of document d and an average length of an entire document set, respectively, $f_i$ is a frequency of a word in the document in a query, and $qf_i$ is a frequency of the word in the query.

It will be noted that, in the BM25 algorithm, first, the text to be answered is segmented into multiple words. Second, a score of each word is calculated according to a relevance between the word and the candidate question text, a relevance between the word and the text to be answered, and a corresponding weight. At last, a relevance between the text to be answered and the candidate question text is calculated according to scores of all the words.

In S110d, the candidate question texts with the relevance meeting a relevance threshold condition are used as the question texts.

For example, if the relevance threshold condition is that the relevance is greater than G', and in this case, the candidate question texts with the relevance being greater than G' are obtained.

If the relevance threshold condition is that the relevance is in a range between G' to G'2, and in this case, the candidate question texts matching the relevance in the range between G' and G'2 are obtained.

It will be noted that, a Top-3 accuracy acting as an evaluation indicator refers to a ratio of a number of questions having at least one answer that satisfies the questions in the first three results returned by the question answering to a total number of questions.

Based on this, after the server obtains the semantic answer text corresponding to the text to be answered, as shown in FIG. 15, the question answering method provided by the embodiments of the present disclosure further includes steps 500 and 600 (S500 and S600) described below.

In S500, the server identifies, from the text to be answered, at least one piece of entity information in the text to be answered using named entity recognition.

The entity information includes an entity and/or an entity category matching the entity, and the entity category includes at least one entity.

For example, the entity category may be fruit or meat. In a case where the entity category is fruit, the entity may include at least one of kiwifruit, watermelon and banana.

It will be noted that, the named entity recognition (NER), also known as "proper names recognition", refers to the recognition of entities with specific meanings in the text.

In S600, a suggestion text corresponding to the entity information is obtained, and is used as a suggestion answer text corresponding to the text to be answered.

In some embodiments, in a case where the entity information includes the entity, that a suggestion text corresponding to the entity information is obtained in S600 may be implemented through step 600a (S600a) described below.

In S600a, the server searches for a suggestion text corresponding to the entity, and the suggestion answer text includes the suggestion text corresponding to the entity.

Specifically, the server may search for an ingredients table of the food in the text to be answered from a food database, the ingredients table of the food including a content of at least one ingredient in the food, obtain a content level corresponding to the content of the at least one ingredient in the food, and search for the suggestion text corresponding to the content level of the at least one ingredient in the food from a suggestion base.

The food database may include the contents of food ingredients and a rule-relationship table of content levels corresponding to the contents of the ingredients, and the ingredients table of the food includes sugar content and/or starch content in the food.

For example, if the text to be answered is "Can diabetics eat grapes?", the server identifies that "grapes" are food from the text to be answered using the named entity recognition, then from the food database, searches for sugar content of grapes, obtains a content level corresponding to the sugar content according to the rule-relationship table, and searches for a suggestion text corresponding to the content level from the suggestion base.

For example, the suggestion text may be that "the sugar content of grapes is up to 10% to 30%, with glucose as the main ingredient. A variety of tartaric acids in grapes are helpful for digestion, so eating grapes appropriately is beneficial to strengthening the spleen and stomach. Grapes contain minerals such as calcium, potassium, phosphorus, iron, and a variety of vitamins such as vitamins B1, B2, B6, C and P, and contain a variety of amino acids necessary for human beings, and thus a frequent intake of grapes is helpful for neurasthenia and overfatigue."

In some other embodiments, in a case where the entity information includes the entity category, S600 may be specifically implemented through step 600b (S600b) described below.

In S600b, at least one entity included in the entity category is determined, the suggestion text corresponding to the at least one entity is sought, and the suggestion answer text includes the suggestion text corresponding to the at least one entity.

Specifically, the server may determine at least one type of food included in the food category in the text to be answered from the food database, search for an ingredients table of each of the at least one type of food, the ingredients table of each type of food including the content of at least one ingredient in the food, obtain a content level corresponding to the content of the at least one ingredient in each type of food, and search for the suggestion text corresponding to the content level of the at least one ingredient in each type of food from the suggestion base.

For example, if the text to be answered is "What fruit can diabetics eat?" The server identifies that the word "fruit" is an entity category from the text to be answered through the named entity recognition, determines at least one type of food included in the "fruit" category from the food database, searches for the ingredients table of each of the at least one type of food, obtains the content level corresponding to a content of at least one ingredient, and searches for the suggestion text corresponding to the content level of the at least one ingredient in each type of food from the suggestion base.

In some embodiments, before the server searches for the ingredients table of the food in the text to be answered from the food database, the question answering method further includes building the food database.

It will be noted that, in the food database, each type of food includes a name, an alias, an English name, calorie content and an ingredients table that includes protein content, carbohydrate content, cholesterol content, mineral content, and vitamin content, besides the sugar content and the starch content.

In some embodiments, before the server searches for the suggestion text corresponding to the content level of the at least one ingredient in the food from the suggestion base, the question answering method further includes building the suggestion base.

In the embodiments, a suggestion base including suggestion texts may be created by a professional doctor according to type of disease, sugar content, starch level, and guidelines and literature related to health management.

In some embodiments, before S500, the question answering method further includes step 800 (S800).

In S800, the server obtains the question category of the text to be answered.

The question category includes diet and non-diet.

In some embodiments, after the question category of the text to be answered is obtained, S500 includes identifying at least one piece of entity information in the text to be answered through the named entity recognition in a case where the question category of the text to be answered is diet.

If the text to be answered is a text of diet and the suggestion answer text is obtained, the suggestion answer text is output.

Otherwise, the semantic answer text is output.

For example, in a case where the text to be answered is "Can you eat potatoes if you get diabetes?", the question category of the text to be answered is diet, and if the suggestion answer text is obtained, then the suggestion answer text is output. For example, the suggestion answer text may be that "potatoes are equivalent to staple food in many regions of our country, and are exchanged with rice and flour at equal value. Therefore, the diabetics can surely eat potatoes. However, compared with polished rice and flour, potatoes also contain a relatively large amount of water and dietary fiber. Therefore, potatoes are able to replace the staple food within an appropriate range, and even have a better glucose-lowering effect than the staple food. But cooking is more important for potatoes. For example, steamed potatoes or mashed potatoes may greatly increase an influence on blood sugar, whereas potatoes made by oil-free cooking methods such as shredded potatoes in sauce can actually lower the blood sugar to a certain extent."

The corresponding semantic answer text is obtained through the above method for obtaining the semantic answer text.

As another example, in a case where the text to be answered is "How to prevent diabetes?", the question category of the text to be answered is non-diet, and in this case, the server outputs the semantic answer text.

It will be noted that, the suggestion answer text is an answer text stored in the suggestion base, and the semantic answer text is an answer text stored in the question answering knowledge base.

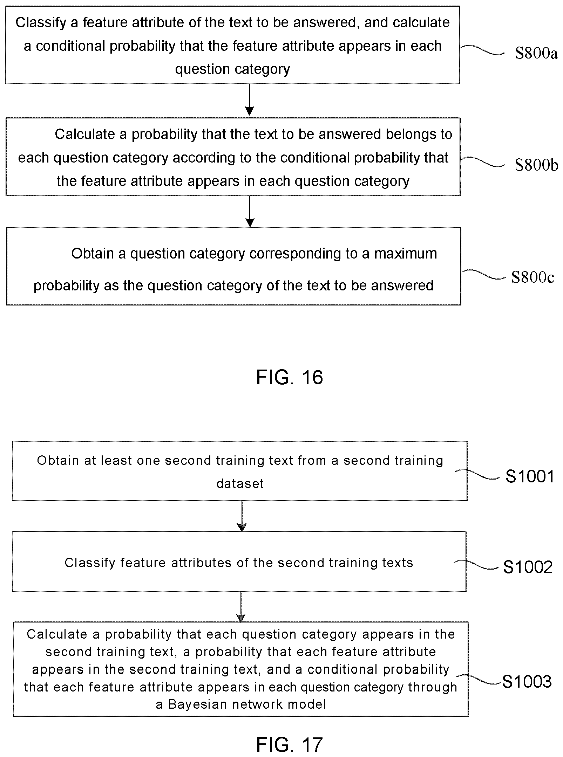

In some embodiments, as shown in FIG. 16, S800 may be specifically implemented through steps 800a, 800b, and 800c (S800a, S800b and S800c) described below.

In S800a, a feature attribute of the text to be answered is classified, and a conditional probability that the feature attribute appears in each question category is calculated.

In S800b, a probability that the text to be answered belongs to each question category is calculated according to the conditional probability that the feature attribute appears in each question category.

In S800c, a question category corresponding to a maximum probability is obtained as the question category of the text to be answered.

In some embodiments, the question answering method further includes building a rule table of sugar content.

For example, the sugar content below 8% is set as low sugar content, the sugar content between 8% and 15% is set as medium sugar content, and the sugar content above 15% is set as high sugar content, so that the rule table of sugar content including three levels is formed.

In some embodiments, before S800, the question answering method further includes obtaining a question classification model through training.

As shown in FIG. 17, the question classification model obtained through training includes steps 1001, 1002 and 1003 (S1001, S1002 and S1003).

In S1001, at least one second training text is obtained from a second training dataset.

The second training dataset includes a plurality of second training texts and question categories matching the second training texts.

It will be noted that, the question category of each second training text is manually determined.

Optionally, before S1001, the question answering method includes:

building a second training dataset.

In S1002, feature attributes of the second training texts are classified.

It will be noted that, based on word frequency, a plurality of words with high word frequencies are screened as the feature attributes.

For example, the second training text is "Can diabetics eat grapes?", and the classified feature attributes are "diabetes", "eat" and "grapes".

In S1003, a probability that each question category appears in the second training text, a probability that each feature attribute appears in the second training text, and a conditional probability that each feature attribute appears in each question category are calculated through a Bayesian network model.

Optionally, before S1003, the question answering method includes:

building a Bayesian network model.

For example, there are two question categories, which are a question category A1 and a question category A2, respectively. The built second training dataset includes 1000 second training texts and matched question categories. If 400 second training texts correspond to the question category A1 and 600 second training texts correspond to the question category A2, a probability that the question category A1 appears is calculated to be $P(A_1)=0.4$, and a probability that the question category A2 appears is calculated to be $P(A_2)=0.6$.

The feature attributes of the plurality of second training texts are classified and 50 feature attributes {B1, B2, ... B50} with the highest word frequency are selected, conditional probabilities of the feature attributes in the question category A1 are calculated to be $\{P(B_1|A_1), P(B_2|A_1),... P(B_{50}|A_1)\}$, and conditional probabilities of the feature attributes in the question category A2 are calculated to be $\{P(B_1|A_2), P(B_2|A_2),... P(B_{50}|A_2)\}$.

Let the text to be answered be x', to determine which question category the text to be answered x' belongs to, conditional probabilities that the text to be answered x' appears in the question categories A1 and A2 should be calculated and compared, and the text to be answered be x' belongs to the question category with larger conditional probability.

$$P(A_1|x')=\frac{P(x'|A_1)P(A_1)}{P(x')}$$

Thus, based on a Bayes Formula, a formula (1)                         , and a formula (2)

$$P(A_2|x')=\frac{P(x'|A_2)P(A_2)}{P(x')}$$

are obtained.

In this case, a numerator of the formula (1) and a numerator of the formula (2) are compared, thus, based on a third formula (3) $P(x'|A_1)P(A_1)=P(B_1|A_1)P(A_1)+P(B_2|A_1)P(A_1)+\cdots+P(B_{50}|A_1)P(A_1)$ and a fourth formula (4) $P(x'|A_2)P(A_2)=P(B_1|A_2)P(A_2)+P(B_2|A_2)P(A_2)+\cdots+P(B_{50}|A_2)P(A_2)$, magnitudes of $P(x'|A_1)P(A_1)$ and $P(x'|A_2)P(A_2)$ may be calculated, so that the question category of the text to be answered x' is obtained.

For example, it is assumed that there are only 3 sentences in the second training dataset, which are:

Q1: Can diabetics drink millet congee?; and the Q1 being manually labeled as label: A1;
Q2: Does the presence of sugar in the urine mean diabetes?; and the Q1 being manually labeled as label: A2; and
Q3: What are the benefits of staple food for diabetes?; and the Q1 being manually labeled as label: A1.

A1 represents dietary questions, and A2 represents non-dietary questions.

After stop words are removed and word segmentation is performed, the second training dataset is:

Q1: "diabetes", "drink", "millet congee", label: A1;
Q2: "urine", "sugar", "diabetes", label: A2; and
Q3: "staple food", "diabetes", "benefits", label: A1.

A dictionary dict = {"diabetes", "drink", "millet congee", "urine", "sugar", "staple food", "benefits"} is obtained.

In this case, P (A1) = 2 / 3, and P (A2) = 1/3.

A formula of the conditional probability is P (W | A1 ) = (num (W, A1) + 1) / (num (A1) + len (dict)).

W represents a word, num (W, A1) represents a number of the words W in the question category A1, num (A1) represents a number of words in the question category A1, and len (dict) represents a length of the dictionary.

Similarly,

$$P (W | A2) = (num (W, A2) + 1) / (num (A2) + len (dict)).$$

In a case where the second training dataset includes the Q1, Q2 and Q3, len (dict) = 7; num (A1) = 5; and num (A2) = 3.

According to the formula of the conditional probability, it may be obtained that:

$$P (diabetes | A1) = (2 + 1) / (5 + 7) = 1/4;$$

$$P (drink | A1) = (1 + 1) / (5 + 7) = 1/6;$$

$$P(millet\ congee | A1) = (1 + 1) / (5 + 7) = 1/6;$$

$$P(staple\ food | A1) = (1 + 1) / (5 + 7) = 1/6;$$

$$P(benefits | A1) = (1 + 1) / (5 + 7) = 1/6;$$

$$P(urine | A2) = (1 + 1) / (3 + 7) = 1/5;$$

$$P(sugar | A2) = (1 + 1)/(3 + 7) = 1/5;$$

and

$$P(diabetes | A2) = (1 + 1) / (3 + 7) = 1/5.$$

Let the text to be answered be x', to determine which question category the text to be answered x' belongs to, the conditional probability that the text to be answered x' appears in the question category A1 and the conditional probability that the text to be answered x' appears in the question category A2 should be determined and compared.

If x' is "Can diabetics drink beer?",

P (A1 | "Can diabetics drink beer?") = P("Can diabetics drink beer?" | A1) P (A1) / P ("Can diabetics drink beer?")
=P ("diabetes", "drink", "beer" |A1) P (A1)
=P ("diabetes" |A1) P ("drink" | A1) P ("beer" | A1) P (A1)
=1/4 × 1/5 × 1 × 2/3 =1/30

Similarly,

$$P(A2 \mid \text{"Can diabetics drink beer?"}) = P(\text{"diabetes"} \mid A2) \, P(\text{"drink"} \mid A2) \, P(\text{"beer"} \mid A2) \, P(A2) = 1/5 \times 0 \times 1 \times 1/3 = 0$$

It is assumed that a probability of the unknown word beer is unified as 1.

P(A1 | "Can diabetics drink beer?") > P (A2 | Can diabetes drink beer)

Therefore, that "Can diabetics drink beer?" belongs to the question category A1.

Based on this, in a case where the question answering system includes a display module used to display the text to be answered, the text to be answered is displayed as black characters on a white background when being input, and the "grapes" is displayed as a blue character on a white background after being labeled, so as to prompt the user to view the character. In addition, each labeled value is used as a word link, and the labeled value will be displayed on an interface that skips in response to the user's operation.

Based on this, it will also be noted that, before S100, the question answering method further includes: building a question answering knowledge base.

The building a question answering knowledge base includes three steps.

In a first step, questions and semantic answers corresponding to the questions are collected, the questions are converted into question texts, and the semantic answers are converted into semantic answer texts.

The questions and the semantic answers may be converted into the question texts and the semantic answer texts, respectively by collecting voices of the questions and the semantic answers corresponding to the questions, and using a voice recognition technology.

In a second step, pre-treatment is performed on the question texts and the semantic answer texts corresponding to the question texts.

The pre-treatment includes at least one of word segmentation, removal of stop words, part-of-speeches tagging, and synonym extension.

In a third step, the question texts and the semantic answer texts corresponding to the question texts are screened.

The meaningful and high-quality question texts and the semantic answer texts matching the question texts may be manually screened.

Moreover, relevant professionals, for example, medical personnel on diabetes, may review the question texts and the semantic answer texts related to diabetes to determine their accuracy.

After the building a question answering knowledge base, the question answering method further includes: obtaining user feedback.

The user's comments and/or suggestions may be obtained after the user obtains the answer text or the semantic answer text on diet by performing the question answering method.

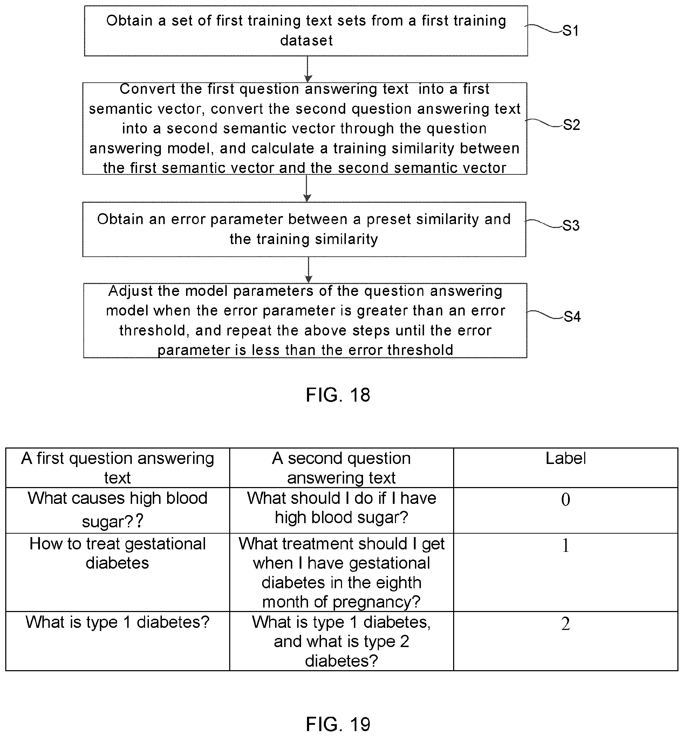

Some embodiments of the present application provide a method for training a question answering model. As shown in FIG. 18, the method for training the question answering model includes steps 1 to 4 (S1 to S4).

In S1, a set of first training text sets is obtained from a first training dataset.

A first training text set includes at least a pair of first question answering text and second question answering text, and a preset tag matching the pair of first question answering text and second question answering text.

For example, in a case where the first training text set includes 64 pairs of first question answering text and second question answering text, correspondingly, there are 64 preset tags matching therewith.

It will be noted that, a preset tag is represented by a real value, and the first question answering texts and the second question answering texts are manually tagged one by one, so as to form a tag. For example, in a case where the first training text set relates to the medical field, professionals in the medical filed may tag the first question answering texts and the second question answering texts.

For example, in a case where "0" represents different semantic meanings, when the first question answering text and the second question answering text are different in the semantic meanings, they are tagged as "0"; in a case where "1" represents the same semantic meanings, when the first question answering text and the second question answering text are same in semantic meanings, they are tagged as "1"; and in a case where "2" represents that the semantic meanings are partially same, when the semantic meanings of the first question answering text and the second question answering text are partially same, the first question answering text and the second question answering text are tagged as "2".

As shown in FIG. 19, in a first set of first training text set, the first question answering text is "What causes high blood sugar?", and the second question answering text is "What should I do if I have high blood sugar?", and in this case, the two texts are different in semantic meanings, so they are tagged as "0"; in a second set of first training text set, the first question answering text is "How to treat gestational diabetes?", and the second question answering text is "What treatment should I get when I have gestational diabetes in the eighth month of pregnancy?", and in this case, the two texts are the partially same in semantic meanings, so they are tagged as "1"; and in a third set of first training text set, the first question answering text is "What is type 1 diabetes?", and the second question answering text is "What is type 1 diabetes, and what is type 2 diabetes?", and in this case, the semantic meanings of the two texts are exactly same, so the two texts are tagged as "2".

Optionally, before S1, the method for training the question answering model further includes building the first training dataset.

In S2, the first question answering text is converted into a first semantic vector, and the second question answering text is converted into a second semantic vector through the question answering model, and a training similarity between the first semantic vector and the second semantic vector is calculated.

It will be noted that, a semantic vector refers to a vector representation in a semantic space. The semantic space is a world of meaning of language.

Optionally, before S2, the method for training the question answering model further includes:

building a question answering model.

In S3, an error parameter between a preset similarity and the training similarity is obtained.

Optionally, in S3, that an error parameter between a preset similarity and the training similarity is obtained includes:

$$\bar{z}=\begin{cases}0, 0\leq \mathrm{Sim}_{ex}(Q',S')\leq \dfrac{1}{3}\\ 2, \dfrac{1}{3}\leq \mathrm{Sim}_{ex}(Q',S')\leq \dfrac{2}{3}\\ 1, \dfrac{2}{3}\leq \mathrm{Sim}_{ex}(Q',S')\leq 1\end{cases}$$

obtaining a corresponding training value through , according to a training similarity $\mathrm{Sim}_{ex}(Q',S')$ between the first semantic vector and the second semantic vector,

Q' is the first semantic vector, and S' is the second semantic vector; and

$$\mathrm{MSE}(z,\bar{z})=\frac{\sum_{i=1}^{N}\left(z_i-\bar{z}\right)^2}{N}$$

calculating a corresponding error parameter through a mean square error loss function , according to the preset similarity and the training value.

N is a number of pairs of first question answering text and second question answering text included in the first training text set, and N is an integer greater than or equal to 1; and zi is a preset similarity matching an i-th pair of first question answering text and second question answering text in the first training text set.

It will be noted that, training may be performed based on a small batch random gradient descent method, and N is a batch size.

In S4, the model parameters of the question answering model are adjusted when the error parameter is greater than an error threshold, and S1 to S3 are repeated until the error parameter is less than the error threshold.

It will be noted that, the error parameter may be set according to needs, and is not limited in the present invention.

Some embodiments of the present invention provide the method for training the question answering model. The set of first training text set is obtained from the first training dataset, the first question answering text is converted into the first semantic vector and the second question answering text is converted into the second semantic vector through the question answering model, and the training similarity between the first semantic vector and the second semantic vector is calculated; then, the error parameter between the preset similarity and the training similarity is obtained, and the model parameters of the question answering model are adjusted when the error parameter is greater than the error threshold, and the above steps are repeated until the error parameter is less than the error threshold, so as to obtain the question answering model through training, so that the similarity between the two texts may be accurately determined in subsequent use of the question answering model, and an accuracy rate of the question answering is further improved.

On this basis, the embodiments of the present invention also build a validation set and a test set. The validation set is used to validate each step in a calculation process of the question answering model, and the test set is used to test the question answering model trained adopting the above method for training the question answering model. Both the validation set and the test set include a plurality of pairs of first question answering text and second question answering text.

In the embodiments of the present invention, proportions of the numbers of pairs of first question answering text and second question answering text that are respectively included in the first training dataset, the validation set and the test set are set to 8:1:1.

For example, as shown in FIG. 20, if there are 12074 pairs of first question answering text and second question answering text, they are randomly classified into the first training dataset, the validation set and the test set according to the proportions of 8:1:1, that is, the first training dataset includes 9660 pairs of first question answering text and second question answering text; the validation set includes 1207 pairs of first question answering text and second question answering text; and the test set also includes 1207 pairs of first question answering text and second question answering text.

Meanwhile, as shown in FIG. 21, in the calculated first question answering texts and the second question answering texts, a number of characters is 1477, a number of words is 4402, a largest number of words in a sentence is 23, a smallest number of words in a sentence is 3, and an average number of words in a sentence is 12.

As shown in FIG. 24, the embodiments provide an apparatus 1800 for determining a text similarity, and the apparatus for determining the text similarity may include a processing module 1801 and a calculation module 1802. The processing module 1801 is configured to convert a text to be answered into a semantic vector to be answered; and the calculation module 1802 is configured to calculate a similarity between the semantic vector to be answered and a question semantic vector of each of at least one question text, and each similarity is a text similarity between the semantic text to be answered and a question text.

In some embodiments, the processing module 1801 is further configured to convert each of the at least one question text into a question semantic vector.

In some embodiments, the processing module 1801 is specifically configured to map the text to be answered into a word embedding vector of at least one word to be answered, convert the word embedding vector of the at least one word to be answered into a semantic vector to be answered, map a question text into a word embedding vector of at least one question word, and convert the word embedding vector of the at least one question word into a question semantic vector.

In some embodiments, the processing module 1801 is specifically configured to convert the word embedding vector of the at least one word to be answered into the semantic vector to be answered using a first neural network, and convert the word embedding vector of the at least one question word into the question semantic vector using a second neural network; and the first neural network and the second neural network are siamese networks.

In some embodiments, the processing module 1801 is specifically configured to calculate a first forward vector $\vec{h}_Q$ according to the word embedding vector of the at least one word to be answered $\{x_1, x_2, ... x_T, ... x_{T1}\}$, $\vec{h}_Q=(\vec{h}_1,\vec{h}_2, ...\vec{h}_t,\cdots\vec{h}_{T1})$, $t \in \{1,... ,T1\}$; $\vec{h}_Q$ and $\{x_1, x_2, ... x_T, ... x_{T1}\}$ satisfying a first set of relations; calculate a first opposite vector $\overleftarrow{h}_Q$ according to the word embedding vector of the at least one word to be answered $\{x_1, x2, ... xT, ... x_{T1}\}$, $\overleftarrow{h}_Q =(\overleftarrow{h}_1, \overleftarrow{h}_2, ... \overleftarrow{h}_t ..., \overleftarrow{h}_{T1})$ ; $\overleftarrow{h}_Q$ and $\{ x_1, x_2, ... x_T, ... x_{T1}\}$ satisfying a second set of relations; obtain a semantic vector $H_Q$ to be answered using $H_Q=[\vec{h}_Q,\overleftarrow{h}_Q]$, according to the first forward vector $\vec{h}_Q$ and the first opposite vector $\overleftarrow{h}_Q$; and/or, calculate a second forward vector $\vec{h}_S$, according to the word embedding vector of the at least one question word $\{x_1, x_2, ... x_t, ... x_{T2}\}$, $\vec{h}s=(\vec{h}_1,\vec{h}_2,\cdots\vec{h}_t,\cdots\vec{h}_{T2})$, $t \in \{1,\cdots,T2\}$, $t \in \{1,\cdots,T1\}$; $\vec{h}_S$ and $\{x_1, x_2, ... x_t, ... x_{T2}\}$ satisfying the first set of relations; calculate a second opposite vector $\overleftarrow{h}_s$, according to the word embedding vector of the at least one question word $\{x_1, x_2, ... x_t, ... x_{T2}\}$, $\overleftarrow{h}_s=(\overleftarrow{h}_1,\overleftarrow{h}_2, \cdots\overleftarrow{h}_t\cdots\overleftarrow{h}_{T2})$, $\overleftarrow{h}_s$ and $\{x_1, x_2, ... x_t, ... x_{T2}\}$ satisfying the second set of relations; and obtain a question semantic vector $H_S$ using $H_S=[\vec{h}_s,\overleftarrow{h}_s]$, according to the second forward vector $\vec{h}_s$ and the second opposite vector $\overleftarrow{h}_s$.

The first set of relations includes:

$$i_t = \text{sigmoid}(W_i x_t + U_i \vec{h}_{t-1} + b_i);$$

$$f_t = \mathrm{sigmoid}(W_f x_t + U_f \vec{h}_{t-1} + b_f)$$ ;

$$\tilde{c}_t = \tanh(W_c x_t + U_c \vec{h}_{t-1} + b_c)$$ ;

$$c_t = i_t \times \tilde{c}_t + f_t \times c_{t-1}$$ ;

$$o_t = \mathrm{sigmoid}(W_o x_t + U_o \vec{h}_{t-1} + b_o)$$ ;

$$\vec{h}_t = o_t \times \tanh(c_t)$$ .

The second set of relations includes:

$$i_t = \mathrm{sigmoid}(W_i y_t + U_i \overleftarrow{h}_{t+1} + b_i)$$ .

$$f_t = \mathrm{sigmoid}(W_f y_t + U_f \overleftarrow{h}_{t+1} + b_f)$$ ;

$$\tilde{c}_t = \tanh(W_c y_t + U_c \overleftarrow{h}_{t+1} + b_c)$$ ;

$$c_t = i_t \times \tilde{c}_t + f_t \times c_{t+1}$$ ;

$$o_t = \mathrm{sigmoid}(W_o y_t + U_o \overleftarrow{h}_{t+1} + b_o)$$ ;

$$\overleftarrow{h}_t = o_t \times \tanh(c_t)$$ ;

and

i is an input gate, f is a forget gate, o is an output gate, and c is a memory unit, $\tilde{c}$ is a temporary memory unit, Wi, Wf, Wc, Wo, Ui, Uf, Uc and Uo are weight matrices, bi, bf, bc and bo are bias vectors, and xt represents a word embedding vector of a t-th word to be answered or a word embedding vector of a t-th question word.

In some embodiments, the calculation module 1802 is specifically configured to calculate a cosine value between the semantic vector to be answered and the question semantic vector, and the cosine value satisfies the following condition: $\cos\theta = \dfrac{H_Q H_S}{\|H_Q\| \|H_S\|}$ , cos θ is the cosine value, $H_Q$ is the semantic vector to be answered, $H_S$ is the question semantic vector; the cosine value is used as a text similarity between the semantic vector to be answered and the question semantic vector; or, the calculation module 1802 is specifically configured to convert the cosine value into the text similarity between the semantic vector to be answered and the question semantic vector, and there is a functional relationship of increasing function between the text similarity between the semantic vector to be answered and the question semantic vector and the cosine value thereof.

In some embodiments, the increasing function is $\mathrm{Sim}_{\mathrm{BiLSTM\text{-}Siamese}}(Q,S) = 0.5 + 0.5\cos\theta$ , and

$Sim_{STM\text{-}Siamese}(Q,S)$ is the text similarity.

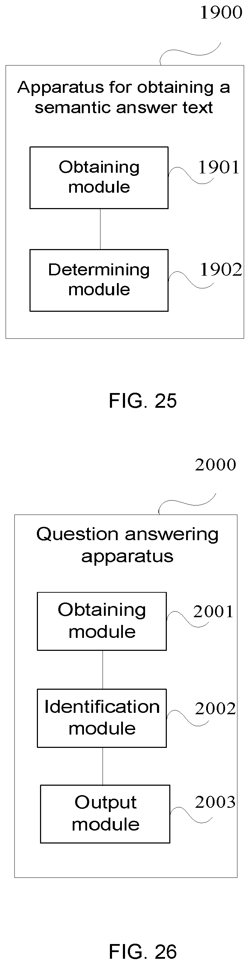

As shown in FIG. 25, the embodiments provide an apparatus 1900 for obtaining a semantic answer text, and the apparatus 1900 for obtaining the semantic answer text includes an obtaining module 1901 and a determining module 1902. The obtaining module 1901 is configured to obtain at least one question text according to a text to be answered; the obtaining module 1901 is further configured to obtain a text similarity between the text to be answered and each question text adopting the above method for determining the text similarity; the determining module 1902 is configured to determine a target question text from the at least one question text obtained by the obtaining module 1901, and a text similarity between the text to be answered and the target question text satisfies a preset condition; and the obtaining module 1901 is further configured to obtain a semantic answer text corresponding to the target answer text.

In some embodiments, the determining module 1902 is specifically configured to calculate a second calculation similarity between the text to be answered and each of at least one question text; the second calculation similarity satisfies the following condition: $sim(E,F)=\alpha Sim_{BiLSTM\text{-}Siamese}(E,F)+\beta Sim_{jaccard}(E,F)$ , sim(E,F) is the second calculation similarity, $Sim_{BiLSTM\text{-}siamese}(E,F)$ is the text similarity, $Sim_{jaccard}(E,F)$ is a first calculation similarity; and

$$Sim_{jaccard}(E,F)=\frac{Inter(E,F)}{Union(E,F)}$$

, E is the text to be answered, F is the question text, Inter (E, F) represents a number of words in an intersection of the text to be answered and the question text, Union (E,F) represents a number of words in a union of the text to be answered and the question text, $\alpha$ is a weight corresponding to the text similarity; $\beta$ is a weight corresponding to the first calculation similarity; a sum of $\alpha$ and $\beta$ is 1 ($\alpha+\beta=1$), $\alpha$ is greater than or equal to 0 and is less than or equal to 1 ($0 \leq \alpha \leq 1$), and $\beta$ is greater than or equal to 0 and is less than or equal to 1 ($0 \leq \beta \leq 1$); and the preset condition satisfied by the text similarity between the text to be answered and the target question text includes the second calculation similarity between the text to be answered and the target question text being greater than a similarity threshold.

In some embodiments, the obtaining module 1901 is specifically configured to retrieve an index file to obtain at least one candidate question text, according to the text to be answered; calculate a relevance between the text to be answered and each candidate question text; and the candidate question text with relevance satisfying the relevance threshold condition is used as the question text.

As shown in FIG. 26, the embodiments provide a question answering apparatus 2000 that includes an obtaining module 2001, an identification module 2002, and an output module 2003. The obtaining module 2001 is configured to obtain a text to be answered; the obtaining module 2002 is further configured to perform the above method for obtaining the semantic answer text to obtain a semantic answer text corresponding to the text to be answered; and/or, the identification module 2002 is configured to identify, from the text to be answered obtained by the obtaining module 2001, at least one piece of entity information in the text to be answered through named entity recognition; the entity information includes an entity and/or an entity category, and the entity category includes at least one entity; the obtaining module 2001 is further configured to obtain a suggestion text corresponding to the entity information as a suggestion answer text corresponding to the text to be answered; and the output module 2003 is configured to output a target answer corresponding to the text to be answered, and the target answer includes a multimedia file corresponding to the semantic answer text or a multimedia file corresponding to the suggestion answer text.

In some embodiments, in a case where the entity information includes the entity, the obtaining module 2001 is specifically configured to search for a suggestion text corresponding to the entity, and the suggestion answer text includes the suggestion text corresponding to the entity; and in a case where the entity information includes the entity category, the obtaining module 2001 is specifically configured to determine at least one entity included in the entity category, and search for a suggestion text corresponding to the at least one entity, and the suggestion answer text includes the suggestion text corresponding to the at least one entity.

In some embodiments, the entity is food and the entity category is a food category. The identification module 2002 is specifically configured to identify the food and/or the food category in the text to be answered using the named entity recognition; the obtaining module 2001 is specifically configured to search for an ingredients table of the food in the text to be answered from a food database, the ingredients table of the food including a content of at least one ingredient in the food; obtain a content level corresponding to the content of the at least one ingredient in the food; search for a suggestion text corresponding to the content level of the at least one ingredient in the food from a suggestion base; determine at least one type of food included in the food category in the text to be answered from the food database; search for the ingredients table of each type of food in the at least one type of food; the ingredients table of each type of food including a content of the at least one ingredient in the food; obtain a content level corresponding to the content of the at least one ingredient in each type of food; and search for a suggestion text corresponding to the content level of the at least one ingredient in each type of food.

In some embodiments, the ingredients table of the food includes sugar content and/or starch content in the food.

In some embodiments, before identifying, from the text to be answered, at least one piece of entity information in the text to be answered using the named entity recognition, the identification module 2002 is further configured to obtain a question category of the text to be answered; the question category includes diet and non-diet; and the recognition module 2002 is specifically configured to identify at least one piece of entity information in the text to be answered using the named entity recognition in a case where the question category of the text to be answered is diet.

In some embodiments, the obtaining module 2001 is specifically configured to classify a feature attribute of the text to be answered, and calculate a conditional probability that the feature attribute appears in each question category; calculate a probability that the text to be answered belongs to each question category, according to the conditional probability that the feature attribute appears in each question category; and obtain a question category corresponding to a maximum probability as the question category of the text to be answered.

In some embodiments, the output module 2003 is specifically configured to output the suggestion answer text if the question category of the text to be answered is diet and the suggestion answer text is obtained; if not, output the semantic answer text.

In some embodiments, the question answering apparatus 2000 further includes a processing module configured to obtain priorities of a plurality of preset question texts according to the text to be answered; and output at least one first preset question text according to the priorities of the plurality of preset question texts, and each first preset question text being one of the plurality of preset question texts; or, output at least one second preset question text according to a preset question screening condition, and a screening condition of the second preset question is unrelated to the text to be answered.

In some embodiments, the processing module is specifically configured to obtain similarities between the plurality of preset question texts and the text to be answered, and determine the priorities of the plurality of preset question texts according to the similarities, and a similarity being proportional to a priority; or, the text to be answered includes at least one keyword, the processing module is specifically configured to obtain similarities between the plurality of preset question texts and the at least one keyword, and determine the priorities of the plurality of preset question texts according to the similarities; or, obtain degrees of association between the plurality of preset questions and the text to be answered, and determine the priorities of the plurality of preset question texts according to the degrees of association, and a priority being proportional to a degree of association.

In some embodiments, the processing module is specifically configured to obtain a number of clicks of the plurality of preset question texts, and according to a descending order of the number of clicks, output at least one preset question text top ranked in the plurality of preset question texts as the second preset question text(s) for output; or, output at least one second preset question text according to at least one of an application scenario, current time and weather.

In some embodiments, the obtaining module 2001 is specifically configured to obtain a request including the question to be answered sent by a terminal, and obtain the text to be answered according to the request, and the text to be answered being a question to be answered in text form; and the processing module is specifically configured to output at least one second preset question text to the terminal according to the preset question screening condition after an online notification from the terminal is received and before the request to be answered sent by the terminal is obtained.

In some embodiments, the multimedia file includes at least one of a text, a voice file and a video file.

In some embodiments, the output module 2003 is further configured to output at least one first article link related to the text to be answered; or, output at least one second article link according to a preset article screening condition, and the preset article screening condition being unrelated to the text to be answered.

In some embodiments, the processing module is specifically configured to obtain a number of clicks of a plurality of article links, and according to a descending order of number of clicks, use at least one article link top ranked in the plurality of article links as the second article link; or, output at least one second article link according to at least one of the application scenario, the current time and the weather.

In some embodiments, the obtaining module 2001 is specifically configured to obtain the request including the question to be answered sent by the terminal, and obtain the text to be answered according to the request, and the text to be answered being the question to be answered in text form; and the processing module is specifically configured to output at least one second article link according to the preset article screening condition after the online notification from the terminal is received and before the request to be answered sent by the terminal is obtained.

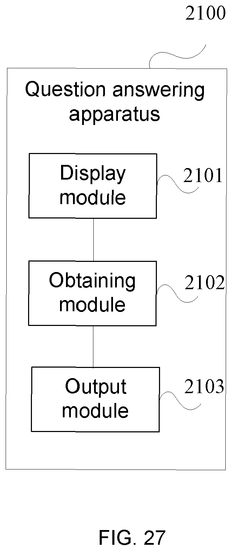

As shown in FIG. 27, the embodiments provide a question answering apparatus 2100. The question answering apparatus 2100 includes a display module 2101, an obtaining module 2102, and an output module 2103. The display module 2101 is configured to display a first interface; the obtaining module 2102 is configured to obtain a question to be answered in response to the user's first operation on the first interface; the output module 2103 is configured to output a target answer corresponding to the text to be answered, and the target answer includes a multimedia file corresponding to a semantic answer text or a multimedia file corresponding to a suggestion answer text; the semantic answer text is the semantic answer text as obtained above, and the suggestion answer text is the suggestion answer text as obtained above.

In some embodiments, after obtaining the question to be answered, the display module 2101 is further configured to display a second interface that includes at least one of a first preset question text and an article category identifier, and the first preset question text is the first preset question text as described above. In a case where the second interface includes the first preset question text, the output module 2103 is further configured to output a preset answer text corresponding to the first preset question text in response to the user's second operation for the first preset question text; and in a case where the second interface includes the article category identifier, the output module 2103 is further configured to output at least one first article link corresponding to the article category identifier in response to the user's third operation for the article category identifier, and the first article link is the first article link as described above.

In some embodiments, before the question to be answered is obtained, the first interface includes at least one of the second preset question text and the article category identifier; the output module 2103 is specifically configured to output the preset answer text corresponding to the second preset question text in response to the user's fourth operation for the second preset question text in a case where the first interface includes the second preset question text; and in a case where the first interface includes the article category identifier, the output module 2103 is specifically configured to output at least one second article link corresponding to the article category identifier in response to the user's fifth operation for the article category identifier.

Some embodiments of the present disclosure provide a computer device that includes a memory and a processor. The memory stores a computer program that is executable on the processor. The method for determining the text similarity as described above is implemented when the processor executes the computer program; or, the method for obtaining the semantic answer text as described above is implemented when the processor executes the computer program; or, the question answering method as described above is implemented when the processor executes the computer program.

Some embodiments of the present disclosure provide a computer-readable storage medium (e.g., a non-transitory computer-readable storage medium). The computer-readable storage medium stores computer program instructions. When run on a processor, the computer program instructions cause the processor to perform one or more steps in the method for determining the text similarity in any of the above embodiments; or, when run on the processor, the computer program instructions cause the processor to perform one or more steps in the method for obtaining the semantic answer text in any of the above embodiments; or, when run on the processor, the computer program instructions cause the processor to perform one or more steps in the question answering method in any of the above embodiments.

For example, the computer-readable storage media may include, but are not limited to, magnetic storage devices (such as hard disks, floppy disks or magnetic tapes), optical disks (such as a compact disk (CD)), a digital versatile disk (DVD)), smart cards and flash memory devices (such as an erasable programmable read-only memory (EPROM), cards, rods or key drivers). Various computer-readable storage media described in the present disclosure may represent one or more devices and/or other machine-readable storage media for storing information. The term "machine-readable storage media" may include, but is not limited to, wireless channels and other various media capable of storing, containing and/or carrying instructions and/or data.

The above descriptions are merely some specific implementation manners of the present disclosure, but the protection scope of the present disclosure is not limited thereto, and changes or replacements that any person skilled in the art could conceive of within the technical scope disclosed by the present disclosure should be within the protection scope of the present disclosure. Therefore, the protection scope of the present disclosure shall be subject to the protection scope of the claims.

**Claims**

1. A method for determining a text similarity, comprising:

   converting a text to be answered into a semantic vector to be answered; and
   calculating a similarity between the semantic vector to be answered and a question semantic vector of each of at least one question text, and each similarity being a text similarity between a semantic text to be answered and a question text.

2. The method for determining the text similarity according to claim 1, wherein the method for determining the text similarity further comprises:
   converting each of the at least one question text into the question semantic vector.

3. The method for determining the text similarity according to claim 1 or 2, wherein the text to be answered includes at least one word to be answered, and the converting a text to be answered into a semantic vector to be answered includes:

mapping the text to be answered into a word embedding vector of the at least one word to be answered; and converting the word embedding vector of the at least one word to be answered into the semantic vector to be answered; and

in a case where the method for determining the text similarity comprises converting each of the at least one question text into the question semantic vector, the method for determining the text similarity comprises: a question text including at least one question word, and the converting each of the at least one question text into the question semantic vector including:

mapping the question text into a word embedding vector of the at least one question word; and converting the word embedding vector of the at least one question word into the question semantic vector.

4. The method for determining the text similarity according to claim 3, wherein

the converting the word embedding vector of the at least one word to be answered into the semantic vector to be answered includes: converting the word embedding vector of the at least one word to be answered into the semantic vector to be answered using a first neural network; and
the converting the word embedding vector of the at least one question word into the question semantic vector includes: converting the word embedding vector of the at least one question word into the question semantic vector using a second neural network; and
the first neural network and the second neural network are siamese networks.

5. The method for determining the text similarity according to claim 3, wherein the converting the word embedding vector of the at least one word to be answered into the semantic vector to be answered includes:

calculating a first forward vector $\vec{h}_Q$ according to the word embedding vector $\{x_1, x_2, \dots x_t, \dots x_{T1}\}$ of the at least one word to be answered, $\vec{h}_Q = (\vec{h}_1, \vec{h}_2, \cdots \vec{h}_t, \cdots \vec{h}_{T1})$, $t \in \{1, \cdots, T1\}$; and $\vec{h}_Q$ and $\{x_1, x_2, \dots x_t, \dots x_{T1}\}$ satisfying a first set of relations;
calculating a first opposite vector $\overleftarrow{h}_Q$ according to the word embedding vector $\{x_1, x_2, \dots x_t, \dots x_{T1}\}$ of the at least one word to be answered, $\overleftarrow{h}_Q = (\overleftarrow{h}_1, \overleftarrow{h}_2, \cdots \overleftarrow{h}_t \cdots, \overleftarrow{h}_{T1})$; and $\overleftarrow{h}_Q$ and $\{x_1, x_2, \dots x_t, \dots x_{T1}\}$ satisfying a second set of relations; and
obtaining the semantic vector to be answered $H_Q$ through $H_Q = [\vec{h}_Q, \overleftarrow{h}_Q]$, according to the first forward vector $\vec{h}_Q$ and the first opposite vector $\overleftarrow{h}_Q$;
and/or,
the converting the word embedding vector of the at least one question word into the question semantic vector includes:

calculating a second forward vector $\vec{h}_s$ according to the word embedding vector $\{x_1, x_2, \dots x_t, \dots x_{T2}\}$ of the at least one question word, $\vec{h}_S = (\vec{h}_1, \vec{h}_2, \cdots \vec{h}_t \cdots \vec{h}_{T2})$, $t \in \{1, \cdots, T2\}$, $t \in \{1, \cdots, T1\}$; and $\vec{h}_s$ and $\{x_1, x_2, \dots x_t, \dots x_{T2}\}$ satisfying the first set of relations;
calculating a second opposite vector $\overleftarrow{h}_s$ according to the word embedding vector $\{x_1, x_2, \dots x_t, \dots x_{T2}\}$ of the at least one question word, $\overleftarrow{h}_S = (\overleftarrow{h}_1, \overleftarrow{h}_2, \cdots \overleftarrow{h}_t \cdots \overleftarrow{h}_{T2})$; and $\overleftarrow{h}_s$ and $\{x_1, x_2, \dots x_t, \dots x_{T2}\}$ satisfying the second set of relations; and
obtaining the question semantic vector $H_s$ through $H_S = [\vec{h}_S, \overleftarrow{h}_S]$, according to the second forward vector $\vec{h}_s$ and the second opposite vector $\overleftarrow{h}_s$;
the first set of relations includes:

$$i_t = \mathrm{sigmoid}(W_i x_t + U_i \vec{h}_{t-1} + b_i)\,;$$

$$f_t = \mathrm{sigmoid}(W_f x_t + U_f \vec{h}_{t-1} + b_f)\,;$$

$$\tilde{c}_t = \tanh(W_c x_t + U_c \vec{h}_{t-1} + b_c)\,;$$

$$c_t = i_t \times \tilde{c}_t + f_t \times c_{t-1} ;$$

$$o_t = \text{sigmoid}(W_o x_t + U_o \vec{h}_{t-1} + b_o) ;$$

$$\vec{h}_t = o_t \times \tanh(c_t) ;$$

the second set of relations includes:

$$i_t = \text{sigmoid}(W_i y_t + U_i \overleftarrow{h}_{t+1} + b_i) ;$$

$$f_t = \text{sigmoid}(W_f y_t + U_f \overleftarrow{h}_{t+1} + b_f) ;$$

$$\tilde{c}_t = \tanh(W_c y_t + U_c \overleftarrow{h}_{t+1} + b_c) ;$$

$$c_t = i_t \times \tilde{c}_t + f_t \times c_{t+1} ;$$

$$o_t = \text{sigmoid}(W_o y_t + U_o \overleftarrow{h}_{t+1} + b_o) ;$$

$$\overleftarrow{h}_t = o_t \times \tanh(c_t) ;$$

wherein i is an input gate, f is a forget gate, o is an output gate, c is a memory unit, $\tilde{c}$ is a temporary memory unit, Wi, Wf, Wc, Wo, Ui, Uf, Uc, and Uo are weight matrices, bi, bf, bc and bo are bias vectors, and $x_t$ represents a word embedding vector of a t-th word to be answered or a word embedding vector of a t-th question word.

6. The method for determining the text similarity according to claim 5, wherein the calculating a similarity between the semantic vector to be answered and a question semantic vector of each of at least one question text includes:

calculating a cosine value between the semantic vector to be answered and the question semantic vector, the

$$\cos\theta = \frac{H_Q H_S}{\|H_Q\| \|H_S\|}$$

cosine value satisfying a following condition: , wherein cos $\theta$ is the cosine value, $H_Q$ is the semantic vector to be answered, and $H_S$ is the question semantic vector; and

the cosine value is used as a text similarity between the semantic vector to be answered and the question semantic vector; or, the cosine value is converted into the text similarity between the semantic vector to be answered and the question semantic vector, and there is a functional relationship of increasing function between the text similarity between the semantic vector to be answered and the question semantic vector and the cosine value.

7. The method for determining the text similarity according to claim 6, wherein the increasing function is $\text{Sim}_{\text{BiLSTM-Siamese}}(Q,S) = 0.5 + 0.5\cos\theta$ , and $\text{Sim}_{\text{BiLSTM-Siamese}}(Q,S)$ is the text similarity .

8. A method for obtaining a semantic answer text, comprising:

obtaining at least one question text according to a text to be answered, and obtaining the text similarity between the text to be answered and each question text adopting the method for determining the text similarity according to any of claims 1 to 7;
determining a target question text from the at least one question text, a text similarity between the text to be answered and the target question text satisfying a preset condition; and
obtaining a semantic answer text corresponding to the target question text.

9. The method for obtaining the semantic answer text according to claim 8, wherein the determining a target question text from the at least one question text includes:

calculating a second calculation similarity between the text to be answered and each of the at least one question text; the second calculation similarity satisfying a following condition: $sim(E,F)=\alpha Sim_{BiLSTM\text{-}Siamese}(E,F)+\beta Sim_{jaccard}(E,F)$, wherein $sim(E,F)$ is the second calculation similarity, $Sim_{BiLSTM\text{-}Siamese}(E,F)$ is the text similarity, $Sim_{jaccard}(E,F)$ is a first calculation similarity;

$$Sim_{jaccard}(E,F)=\frac{Inter(E,F)}{Union(E,F)}$$

, E is the text to be answered, F is the question text, Inter (E, F) represents a number of words in an intersection of the text to be answered and the question text, Union (E,F) represents a total number of words in a union of the text to be answered and the question text, $\alpha$ is a weight corresponding to the text similarity; $\beta$ is a weight corresponding to the first calculation similarity; and a sum of $\alpha$ and $\beta$ is 1 ($\alpha$ + $\beta$ = 1), $\alpha$ is greater than or equal to 0 and is less than or equal to 1 ($0 \le \alpha \le 1$), and $\beta$ is greater than or equal to 0 and is less than or equal to 1 ($0 \le \beta \le 1$); and
the preset condition satisfied by the text similarity between the text to be answered and the target question text includes the second calculation similarity between the text to be answered and the target question text being greater than a similarity threshold.

10. The method for obtaining the semantic answer text according to claim 8, wherein the obtaining at least one question text according to a text to be answered includes:

retrieving an index file to obtain at least one candidate question text, according to the text to be answered;
calculating a relevance between the text to be answered and each candidate question text; and
using a candidate question text with a relevance satisfying a relevance threshold condition as the question text.

11. A question answering method, comprising:

obtaining a text to be answered;
obtaining a semantic answer text corresponding to the text to be answered by performing the method for obtaining the semantic answer text according to any of claims 8 to 10;
and/or, identifying, from the text to be answered, at least one piece of entity information in the text to be answered through named entity recognition; the entity information including an entity and/or an entity category, and the entity category including at least one entity; and obtaining a suggestion text corresponding to the entity information as a suggestion answer text corresponding to the text to be answered; and
outputting a target answer corresponding to the text to be answered, the target answer including multimedia file corresponding to the semantic answer text or a multimedia file corresponding to the suggestion answer text.

12. The question answering method according to claim 11, wherein

in a case where the entity information includes the entity, the obtaining a suggestion text corresponding to the entity information includes: searching for a suggestion text corresponding to the entity, and the suggestion answer text including the suggestion text corresponding to the entity;
in a case where the entity information includes the entity category, the obtaining a suggestion text corresponding to the entity information as a suggestion answer text corresponding to the text to be answered includes: determining at least one entity included in the entity category and searching for a suggestion text corresponding to the at least one entity, and the suggestion answer text including the suggestion text corresponding to the at least one entity.

13. The question answering method according to claim 12, wherein the entity is food, and the entity category is a food category;
the identifying, from the text to be answered, at least one piece of entity information in the text to be answered through named entity recognition includes:

identifying the food and/or the food category in the text to be answered through the named entity recognition; the searching for a suggestion text corresponding to the entity includes:

searching for an ingredients table of the food in the text to be answered from a food database, the ingredients table of the food including a content of at least one ingredient in the food; and obtaining a content level corresponding to the content of the at least one ingredient in the food; and searching for the suggestion text corresponding to the content level of the at least one ingredient in the food from a suggestion base; and the determining at least one entity included in the entity category and searching for a suggestion text corresponding to the at least one entity includes:

determining at least one type of food included in the food category in the text to be answered from the food database; searching for an ingredients table of each of the at least one type of food, the ingredients table of each type of food including a content of at least one ingredient in the food; and obtaining a content level corresponding to the content of the at least one ingredient in each type of food; and searching for the suggestion text corresponding to the content level of the at least one ingredient in each type of food from the suggestion base.

14. The question answering method according to claim 13, wherein the ingredients table of the food includes sugar content and/or starch content in the food.

15. The question answering method according to any of claims 11 to 14, wherein before the identifying, from the text to be answered, at least one piece of entity information in the text to be answered through named entity recognition, the question answering method further includes:

obtaining a question category of the text to be answered, and the question category including diet and non-diet; and the identifying, from the text to be answered, at least one piece of entity information in the text to be answered through named entity recognition includes: in a case where the question category of the text to be answered is diet, identifying, from the text to be answered, the at least one piece of entity information in the text to be answered through the named entity recognition.

16. The question answering method according to claim 15, wherein the obtaining a question category of the text to be answered includes:

classifying a feature attribute for the text to be answered, and calculating a conditional probability that the feature attribute appears in each question category; calculating a probability that the text to be answered belongs to each question category, according to the conditional probability that the feature attribute appears in each question category; and obtaining a question category corresponding to a maximum probability as the question category of the text to be answered.

17. The question answering method according to claim 11, wherein the outputting a target answer text corresponding to the text to be answered includes:

if the text to be answered is of diet and the suggestion answer text is obtained, outputting the suggestion answer text; and if not, outputting the semantic answer text.

18. The question answering method according to any of claims 11 to 17, wherein the question answering method further comprises:

obtaining priorities of a plurality of preset question texts according to the text to be answered; and outputting at least one first preset question text according to the priorities of the plurality of preset question texts, each first preset question text being one of the plurality of preset question texts; or,

outputting at least one second preset question text according to a preset question screening condition, the second preset question screening condition is unrelated to the text to be answered.

**19.** The question answering method according to claim 18, wherein
the obtaining priorities of a plurality of preset question texts according to the text to be answered includes:

obtaining similarities between the plurality of preset question texts and the text to be answered, and determining the priorities of the plurality of preset question texts according to the similarities, and a similarity being proportional to a priority;
or,
the text to be answered including at least one keyword, obtaining similarities between the plurality of preset question texts and the at least one keyword, and determining the priorities of the plurality of preset question texts according to the similarities;
or,
obtaining degrees of association between the plurality of preset questions and the text to be answered, and determining the priorities of the plurality of preset question texts according to the degrees of association, and a priority being proportional to a degree of association.

**20.** The question answering method according to claim 18, wherein
the outputting at least one second preset question text according to a preset question screening condition includes:

obtaining a number of clicks of the plurality of preset question texts, and according to a descending order of the number of clicks, outputting at least one preset question text top ranked in the plurality of preset question texts as second preset question text(s) ;
or,
outputting the at least one second preset question text according to at least one of an application scenario, current time and weather.

**21.** The question answering method according to claim 11, wherein

the obtaining a text to be answered includes: obtaining a request including a question to be answered sent by a terminal, and obtaining the text to be answered according to the request, the text to be answered being a question to be answered in a text form;
the outputting at least one second preset question text according to a preset question screening condition includes:
outputting the at least one second preset question text to the terminal according to the preset question screening condition after an online notification of the terminal is received and before a request to be answered sent by the terminal is obtained.

**22.** The question answering method according to claim 11, wherein the multimedia file includes at least one of a text, a voice file and a video file.

**23.** The question answering method according to any of claims 11 to 22, wherein the question answering method further comprises:

outputting at least one first article link related to the text to be answered;
or, outputting at least one second article link according to a preset article screening condition, and the preset article screening condition being unrelated to the text to be answered.

**24.** The question answering method according to claim 23, wherein
the outputting at least one second article link according to a preset article screening condition includes:

obtaining a number of clicks of a plurality of article links, and according to a descending order of the number of clicks, using at least one article link top ranked in the plurality of article links as second article link(s);
or,
outputting the at least one second article link according to at least one of an application scenario, current time and weather.

**25.** The question answering method according to claim 23, wherein

the obtaining a text to be answered includes: obtaining a request including a question to be answered sent by a terminal, and obtaining the text to be answered according to the request, the text to be answered being a question to be answered in a text form; and
the outputting at least one second article link according to a preset article screening condition includes: outputting the at least one second article link according to the preset article screening condition after an online notification of a terminal is received and before a request to be answered sent by the terminal is obtained.

**26.** A question answering method, comprising:

displaying a first interface;
obtaining a question to be answered in response to a user's first operation on the first interface;
outputting a target answer corresponding to a text to be answered, the target answer including a multimedia file corresponding to a semantic answer text or a multimedia file corresponding to a suggestion answer text;
the semantic answer text being the semantic answer text obtained according to any of claims 11 to 25; and the suggestion answer text being the suggestion answer text obtained according to any of claims 11 to 25.

**27.** The question answering method according to claim 26, wherein after the obtaining a question to be answered, the question answering method further comprises:

displaying a second interface, the second interface including at least one of a first preset question text and an article category identifier, and the first preset question text being the first preset question text according to any of claims 18 to 25;
outputting a preset answer text corresponding to the first preset question text in response to the user's second operation for the first preset question text, in a case where the second interface includes the first preset question text; and
outputting at least one first article link corresponding to the article category identifier in response to the user's third operation for the article category identifier in a case where the second interface includes the article category identifier, and the first article link being the first article link according to any of claims 23 to 25.

**28.** The question answering method according to claim 27, wherein before the obtaining a question to be answered, the first interface includes at least one of a second preset question text and the article category identifier;

in a case where the first interface includes the second preset question text, a preset answer text corresponding to the second preset question text is output in response to the user's fourth operation for the second preset question text; and
in a case where the first interface includes the article category identifier, at least one second article link corresponding to the article category identifier is output in response to the user's fifth operation for the article category identifier.

**29.** An apparatus for determining a text similarity, comprising a processing module and a calculation module;

the processing module being configured to convert a text to be answered into a semantic vector to be answered; and
the calculation module being configured to calculate a similarity between the semantic vector to be answered and a question semantic vector of each of at least one question text, and each similarity being a text similarity between a semantic text to be answered and a question text.

**30.** An apparatus for obtaining a semantic answer text, comprising an obtaining module and a determining module;

the obtaining module being configured to obtain at least one question text according to a text to be answered;
the obtaining module being further configured to obtain the text similarity between the text to be answered and each question text adopting the method for determining the text similarity according to any of claims 1 to 7;
the determining module being configured to determine a target question text from the at least one question text obtained by the obtaining module, a text similarity between the text to be answered and the target question text satisfying a preset condition; and
the obtaining module being further configured to obtain a semantic answer text corresponding to the target question text.

31. A question answering apparatus, comprising an obtaining module, an identification module, and an output module;

the obtaining module being configured to obtain a text to be answered;
the obtaining module being further configured to obtain a semantic answer text corresponding to the text to be answered by performing the method for obtaining the semantic answer text according to any of claims 8 to 10; and/or,
the identification module being configured to identify, from the text to be answered obtained by the obtaining module, at least one piece of entity information in the text to be answered through named entity recognition; and the entity information including an entity and/or an entity category, and the entity category including at least one entity;
the obtaining module being further configured to obtain a suggestion text corresponding to the entity information as a suggestion answer text corresponding to the text to be answered; and
the output module being configured to output a target answer corresponding to the text to be answered, and the target answer including a multimedia file corresponding to the semantic answer text or a multimedia file corresponding to the suggestion answer text.

32. A question answering apparatus, comprising a display module, an obtaining module, and an output module;

the display module being configured to display a first interface;
the obtaining module being configured to obtain a question to be answered in response to a user's first operation on the first interface; and
the output module being configured to output a target answer corresponding to a text to be answered, and the target answer including a multimedia file corresponding to a semantic answer text or a multimedia file corresponding to a suggestion answer text; the semantic answer text being the semantic answer text obtained according to any of claims 11 to 25; and the suggestion answer text being the suggestion answer text obtained according to any of claims 11 to 25.

33. A computer device, comprising a memory and a processor; the memory storing a computer program executable on the processor, and the method for determining the text similarity according to any of claims 1 to 7 being implemented when the processor executes the computer program;

or, the method for obtaining the semantic answer text according to any of claims 8 to 10 being implemented when the processor executes the computer program;
or, the question answering method according to any of claims 11 to 28 being implemented when the processor executes the computer program;

34. A computer-readable storage medium storing a computer program, and the method for determining the text similarity according to any of claims 1 to 7 being implemented when the computer program is executed by a processor;

or, the method for obtaining the semantic answer text according to any of claims 8 to 10 being implemented when the computer program is executed by the processor;
or, the question answering method according to any of claims 11 to 28 being implemented when the computer program is executed by the processor.

100

110

Electronic device

Wired/wireless network

120

Server

FIG. 1

110

112

111

112A — Speaker

112B — Receiver

112 Audio module

112C — Microphone

112D — Earphone interface

111 Processor

Sensor module — 115

Display — 116

Camera — 117

113 — Internal memory

114 — External memory interface

FIG. 2

FIG. 3

```
┌─────────────────┐              ┌─────────────────┐
│     Terminal    │              │     Server      │
└────────┬────────┘              └────────┬────────┘
         │                                │
┌────────┴────────┐                       │
│ In S102, display a first                │
│    interface    │                       │
└────────┬────────┘                       │
         │                                │
┌────────┴────────┐                       │
│ In S103, obtain the question            │
│    to be answered                       │
└────────┬────────┘                       │
         │  In S104, the request          │
         │  including the question to be  │
         │  answered                      │
         ├───────────────────────────────►│
         │                       ┌────────┴────────┐
         │                       │ In S105, obtain the text to be
         │                       │    answered     │
         │                       └────────┬────────┘
         │  In S106, the target answer    │
         │  corresponding to the text to  │
         │  be answered                   │
         │◄───────────────────────────────┤
         │                                │
```

FIG. 4

## Smart questions and answers about diabetes

Professional answer & quick response — 501  502

| Question description | 🎤 | Search for answers |

Self-test tips for diabetes | Who are vulnerable to diabetes | What fruit can diabetics eat

Guess you want to ask                                      ↻ Change

What are the causes of diabetes?

503

Can type 2 diabetes be cured?

What are the hypoglycemic drugs?

How to eat with diabetes?

Who are vulnerable to diabetes?

Will gestational diabetes develop diabetes?

### Article on popular science

504

**Diet**
Eat in a timely and rationed way, determine menu for meals, keep off sweet food, follow dietary regulations, and measure weight on a weekly basis

**Prevention**
Mass research results demonstrate that, a good life style is an effective measure to slow and reverse pre-diabetes

**Exercise**
Maintain exercises at a moderate level, such as cycling, brisk walking, jogging, and swimming

**Nursing**
Check your feet once a day to observe the skin color, temperature, the sensation of the feet nerves, arterial pulsation of the instep, etc.

**Medication**
Take orally hypoglycemic drugs on time (before meals, during meals, and after meals), and observe the effects and side effects of the drugs

**Complication**
Long-term increase in blood sugar, damage to great vessels and microvessels, which endangers brain, kidneys, peripheral nerves, eyes, feet, etc.

## FIG. 5A

Smart questions and answers ☺
about diabetes

Who are vulnerable
to diabetes?

The following are high-risk groups of diabetes:
1. Older people: usually refers to people over
40 years old; 2. People having a history of pre-
diabetes: pre-diabetes means that blood sugar
is higher than that of normal persons, but does
not reach the diagnostic criteria for diabetes; 3.
People who are obese or overweight:
especially those who are centrally obese; 4.
People whose first-degree relatives are
diabetic: such as parents with diabetes; 5.
People with abnormal blood pressure: people
with high blood pressure or people who are
receiving hypertension treatment

See more

2019-08-20 10:57:11

Input question                                    ⍾    Send

FIG. 5B

Home page  Smart assistant

Home page/diet

Hot articles                                    ↻ Change

Ten common confusions about diabetic diet

Upon hearing the words "diabetic diet" , you might feel a little upset or frustrated. However, diabetes does not mean that you are forbidden to eat everything. You can still eat sweets and snacks as long as they are in an appropriate amount. You may have heard the following three statements: eating too much sugar will lead to diabetes; you have to be careful to choose the food as there are a lot of dietary rules for people with diabetes,  and you have to give up all the food you like when you start a diabetic diet. These three statements...

An enlightenment from the latest research on type 2 diabetes: --Diabetes due to eating!

Because 1. genetic factors, 2. environment and living habits; especially environmental factors and bad lifestyles,  are closely related to the occurrence of diabetes, and the main factor leading to a high incidence of diabetes is the improvement of living standards and the relative backward health care awareness, for example, people take fewer exercises when consuming too much energy. Special attention should be paid to obesity, especially, abdominal obesity, i.e., "general's belly" that we generally call. Some experts say: "diabetes is caused due to obesity, sugar...

What is the ideal diet control goal for people with gestational diabetes?

The ideal diet control goal of food therapy (diet control is the main method to treat gestational diabetes mellitus (GDM)) is to ensure and provide calories and nutritional needs during the pregnancy period, avoid postprandial hyperglycemia or starvation ketosis, and ensure normal growth and development of the fetus. Be careful not to over-control diet, otherwise it will lead to starvation ketosis in pregnant women and fetal growth restriction.

## FIG. 6A

Home page Smart assistant

Home page/prevention

Hot articles                                              ⟳Change

**Complications of diabetes：early prevention-early diagnosis-early treatment**

The life expectancy of diabetics without active treatment is 5-10 years shorter than that of normal people. Although premature cardiovascular disease is the most common cause of disability and death, microvascular disease resulting from diabetes is also one of the causes. Diabetes is the most common cause of renal replacement therapy (renal dialysis) and is also the leading cause of blindness of people under 65. In addition, diabetes is the most common cause of non-traumatic amputation. For the existing medical conditions, these malignant times...

**Song about the prevention of diabetes**

The song of prevention of diabetes: Be vigilant that disease enters by the mouth, have quantified tobacco, alcohol, fish, and meat, eat coarse food grains every day, stay away from fried fast food, eat less salt and less oil, drink more water, communicate with relatives and friends in a frequent way, adjust the biological clock seasonally, fall asleep before midnight, update the work plan frequently, and put exercise in a first place. Though the work is stressful and things are complicated, there is peace in your own heart. Cherish the opportunity to experience and often do public body building exercises. Show filial piety to the elders...

**Preventions of the type 2 diabetes**
1. Development status and trends of diabetes. The incidence of diabetes is increasing in all countries in the world, 90% of them are type 2 diabetes. According to a report from the International Diabetes Institute (IDI) in 2003, there are approximately 194 million (diagnosed) diabetics in the world, and this number will exceed 333 million by 2025. The growth rate of developing countries has exceeded that of developed countries (200% vs. 45%). In the 21st century, DM will spread in developing countries such as China and India...

FIG. 6B

Home page  Smart assistant

Home page/exercise

Hot articles                    ⟳ Change

**How do people with gestational diabetes take exercise every day? How many exercises are appropriate?**

Appropriate exercises can lower blood sugar of people with gestational diabetes and improve insulin sensitivity. Exercise mode may be very light exercise (such as walking) or light exercise (such as walking at a moderate speed) for 20 to 40 minutes, at least once a day. Generally, a walk for 30 minutes begins after one hour of meals. One should take a stroll on the flat road for 40 minutes for 2 kilometers after one hour of meals five times a week. After exercises, there is slight sweat, and one will be relaxed and happy. Appetite, sleep...

**Diabetics should take exercise in this way**

Physical activities play an important role in the treatment of type 2 diabetes. Exercises can increase insulin sensitivity, improve blood sugar control, and help reduce weight. The forms of exercises:
Selections of the forms, content, duration and frequency of exercises depends on a patient's age, disease and physical condition, a condition of current blood sugar control and lifestyles. The types of physical activities and intensity of 30 minutes...

**Exercise therapy of diabetes**

Diet control, exercise, standardized drug treatment, regular testing, and health education are five methods of diabetes prevention and treatment measures. Exercise therapy is not only conducive to disease control of diabetics, but also...

## FIG. 6C

Home page    Smart assistant

Home page/nursing

Hot articles                    ⟳ Change

**1**

Diabetics need to do five things well, that is, they should implement the five methods: (1) understand knowledge of diabetes, as it is said that if you know your enemies and know yourself, you will not be imperiled in a hundred battles; (2) diabetes diet, the cornerstone for the treatment of diabetes, like, a ground base is required for building of a house; (3) appropriate exercise, which needs to be persistent; (4) drug treatment, every patient has a treatment plan that is suitable for her/him, and the best drug is not necessarily the most expensive, and it is not the cheapest...

**2**

No matter what the health products are, in what forms, and how the functions of lowering blood sugar and treating complications are exaggerated, the essential attributes of the health products are three forms, i.e., the health products, minerals, health food adding some minerals: that the health food is 'sugar-free' only means that no glucose or sucrose is contained, and the blood sugar will also increase if too much health food is consumed, which affects the health. The main components of the sugar-free food are staple food and starch, which are not beneficial to controlling blood sugar if they are not limited...

## FIG. 6D

Home page　Smart assistant

Home page/medication

Hot articles　　　　　　　　　　　⟳ Change

**Research and clinical implementation of drug intervention of type 2 diabetes with increased postprandial blood glucose**

For patients with type 2 diabetes, due to insufficient insulin secretion and delayed insulin secretion peak, glucagon does not drop, glycogen is generated abnormally and glucose utilization in peripheral tissues is abnormal, which cause postprandial hyperglycemia. A sharp increase in postprandial blood glucose may lead to an increase in oxidative stress, which causes acute toxic reaction. HbA1C increases continuously, glycosylation products are deposited in the terminal organs, which causes macrovascular and microvascular complications. Currently, there are researches demonstrating that [1] sharp increase in postprandial blood glucose...

**Medication of diabetic neuropathy**
Ⅰ. General principles of treatment: the clinical manifestations of the patient's peripheral neuropathy are taken into account, the degree of ulcers on the numb feet is assessed, and common sense about foot care is provided. Patients with diabetic peripheral neuropathy need regular and long-term follow-ups, especially regular feet examination; 2. Commonly used methods of medication: a purpose is to reduce disability and prevent complications: 1. Etiological treatment: ① Blood sugar control: high blood sugar is actively and strictly controlled and...

**Drug combinations to treat diabetes**
There are many benefits of drug combinations, for they work together to achieve good results, and learn from each other's strengths to make up for the weaknesses to bring safeness. Measures are chosen in scientific and careful way. A combination of metformin and sulfonylurea is used to balance too much weight. A combination of metformin and sensibilization is helpful to reduce resistance. A combination of glinides and biguanide is to achieve comprehensive control, which is chosen easily. A combination of carbose and biguanide pays attention to more gastrointestinal reactions. If insulin is combined with various drugs mentioned above, one should be careful with low sugar and not to overtake the drugs. Drugs also evolves unification – splitting - reunification cycles, for safety and efficiency...

# FIG. 6E

Home page    Smart assistant

Home page/complications

Hot articles                                   ⟳ Change

**How to avoid complications after diagnosed with diabetes**

Many people have asked me that how to avoid complications after diagnosed with diabetes. I said that one should: 1. control blood sugar, blood pressure, blood fat, and uric acid, which should be controlled to be in normal or proximate to normal condition, and complications will not easily occur; 2. control the blood viscosity, older people tend to have high blood viscosity, so their blood flows slowly, and therefore, macrovascular and microvascular blockages easily occurs. Hence, some anticoagulant drugs should be taken; 3. eat more fiber...

**Health Care Hall of Beijing Television (BTV)—Invisible Diabetes (1)**

High blood sugar can affect all organs of the body. Many people know that they have diabetes when seeing a doctor after they become blind. Currently, diabetes is one of the main causes of blindness. The impact of diabetes on the eyes is not only limited to blindness, but may cause damage to every structure of the eyes. For example, diabetics are prone to hordeolum (the effect on the eyes) and cataracts (the effect on the lenses), i.e., diabetic cataract. Some diabetics...

**Diagnosis and treatment of diabetes kidney disease**

Diagnosis and treatment of diabetes kidney disease (DKD), as one of the microvascular complications of diabetes, is an important cause of diabetic disability. As the incidence of diabetes in our country is increasing year by year...

FIG. 6F

Smart questions and answers about diabetes ✕

... mother has diabetes; 5. People with abnormal
blood pressure: People with high blood pressure or
people who are receiving hypertension treatment
are likely to merge

See more

2019-08-20 10:54:20

Input question    𝒬    Send

## FIG. 7

Convert the text to be answered into a semantic vector to be answered — S10

Convert each of the at least one question text into a question semantic vector — S30

Calculate a similarity between the semantic vector to be answered and a question semantic vector of each of the at least one question text — S20

## FIG. 8

Map the text to be answered into a word embedding vector of at least one word to be answered ⌐∽ S11

Convert the word embedding vector of the at least one word to be answered into a semantic vector to be answered ⌐∽ S12

S10

Map the question text into a word embedding vector of at least one question word ⌐∽ S31

Convert the word embedding vector of the at least one question word into a question semantic vector ⌐∽ S32

S30

Calculate a cosine value between the semantic vector to be answered and the question semantic vector ⌐∽ S21

## FIG. 9

Calculate a first forward vector $\vec{h}_Q$ according to the word embedding vector of at least one word to be answered $\{x_1, x_2, \ldots x_t, \ldots x_{T1}\}$ ∽S121

Calculate a first opposite vector $\overleftarrow{h}_Q$ according to the word embedding vector of the at least one word to be answered $\{x_1, x_2, \ldots x_t, \ldots x_{T1}\}$ ∽S122

Obtain the semantic vector to be answered $H_Q$ using $H_Q = \left[ \vec{h}_Q, \overleftarrow{h}_Q \right]$ according to the first forward vector $\vec{h}_Q$ and the first opposite vector $\overleftarrow{h}_Q$ ∽S123

## FIG. 10

Calculate a second forward vector $\overrightarrow{h}_S$ according to the word embedding vector of the at least one question word $\{x_1, x_2, \dots x_t, \dots x_{T2}\}$ — S321

Calculate a second opposite vector $\overleftarrow{h}_S$ according to the word embedding vector of the at least one question word $\{x_1, x_2, \dots x_t, \dots x_{T2}\}$ — S322

Obtain the question semantic vector $H_s$ using $H_S = \left[ \overrightarrow{h}_S, \overleftarrow{h}_S \right]$, according to the second forward vector $\overrightarrow{h}_S$ and the second opposite vector $\overleftarrow{h}_S$ — S323

FIG. 11

Obtain at least one question text according to the text to be answered — S100

Obtain a text similarity between the text to be answered and each of at least one question text adopting the method for determining the text similarity — S200

Determine a target question text from the at least one question text — S300

Obtain the semantic answer text corresponding to the target question text — S400

FIG. 12

Home page    Smart assistant

Home page/results

Who are vulnerable to diabetes?                                    🎤 Voice answer

Kindly reminder: Results of the online smart questions and answers are for reference only. Please consult professional doctors for more information.

▦   Who are vulnerable to diabetes

People at high risks of diabetes usually are:

1. People in older age: usually refer to people over 40;

2. People with a history of pre-diabetes; pre-diabetes means that blood sugar is higher than that of normal people, but does not reach the diagnostic criteria for diabetes

3. Obese or overweight people, especially those with central obesity

4. People whose first-degree relatives are diabetic: such as parents with diabetes

5. People with abnormal blood pressure; hypertensive patients or people undergoing hypertension treatment are likely to have their blood sugar increased;

6. People with a history of gestational diabetes;

7. People who are sedentary and lack exercises;

8.People who have taken antipsychotic drugs and hormone drugs over a long period of time.

Is this answer useful?   👍 👎

≡ Similar questions

Who are vulnerable to diabetes?

Causes of diabetes

Who are prone to develop diabetes during pregnancy?

What food may lead to diabetes?

What diseases are associated with diabetes?

Is it easy to treat kids with diabetes?

Are obese people more likely to get diabetes?

Who are vulnerable to type 2 diabetes?

Why women develop diabetes during pregnancy ? How to avoid it?

When is gestational diabetes more likely to show up?

FIG. 13

Create an index file using Whoosh — S100a

Retrieve the index file according to the text to be answered to obtain at least one candidate question text — S100b

Calculate a relevance between the text to be answered and each candidate question text — S100c

Use the candidate question texts with the relevance meeting a relevance threshold condition as the question texts — S100d

FIG. 14

The server identifies, from the text to be answered, at least one piece of entity information in the text to be answered using the named entity recognition — S500

A suggestion text corresponding to the entity information is obtained, and is used as a suggestion answer text corresponding to the text to be answered. — S600

FIG. 15

Classify a feature attribute of the text to be answered, and calculate a conditional probability that the feature attribute appears in each question category — S800a

Calculate a probability that the text to be answered belongs to each question category according to the conditional probability that the feature attribute appears in each question category — S800b

Obtain a question category corresponding to a maximum probability as the question category of the text to be answered — S800c

FIG. 16

Obtain at least one second training text from a second training dataset — S1001

Classify feature attributes of the second training texts — S1002

Calculate a probability that each question category appears in the second training text, a probability that each feature attribute appears in the second training text, and a conditional probability that each feature attribute appears in each question category through a Bayesian network model — S1003

FIG. 17

```
┌─────────────────────────────────────────────────┐
│  Obtain a set of first training text sets from a │
│              first training dataset              │───S1
└─────────────────────────────────────────────────┘
                         │
                         ▼
┌─────────────────────────────────────────────────┐
│  Convert the first question answering text into a│
│ first semantic vector, convert the second question│
│ answering text into a second semantic vector      │───S2
│ through the question answering model, and calculate│
│ a training similarity between the first semantic  │
│ vector and the second semantic vector             │
└─────────────────────────────────────────────────┘
                         │
                         ▼
┌─────────────────────────────────────────────────┐
│ Obtain an error parameter between a preset        │
│    similarity and the training similarity         │───S3
└─────────────────────────────────────────────────┘
                         │
                         ▼
┌─────────────────────────────────────────────────┐
│  Adjust the model parameters of the question      │
│ answering model when the error parameter is       │
│ greater than an error threshold, and repeat the   │───S4
│ above steps until the error parameter is less     │
│ than the error threshold                          │
└─────────────────────────────────────────────────┘
```

FIG. 18

| A first question answering text | A second question answering text | Label |
|---|---|---|
| What causes high blood sugar?? | What should I do if I have high blood sugar? | 0 |
| How to treat gestational diabetes | What treatment should I get when I have gestational diabetes in the eighth month of pregnancy? | 1 |
| What is type 1 diabetes? | What is type 1 diabetes, and what is type 2 diabetes? | 2 |

FIG. 19

| Name | Number |
|---|---|
| A first training dataset | 9660 |
| Validation set | 1207 |
| Test set | 1207 |

FIG. 20

| Name | Number |
|---|---|
| Number of characters | 1477 |
| Number of words | 4402 |
| Largest number of words in a sentence | 23 |
| Smallest number of words in a sentence | 3 |
| Average number of words in a sentence | 12 |

FIG. 21

| Algorithm | Accuracy rate |
|---|---|
| ESIM | 0.716 |
| Bi-LSTM | 0.868 |

FIG. 22

| Method | Accuracy rate | Precision rate | Recall rate | F1 |
|---|---|---|---|---|
| Bi-LSTM based on characters | 0.791 | 0.717 | 0.629 | 0.670 |
| Bi-LSTM based on words | 0.868 | 0.823 | 0.776 | 0.799 |

FIG. 23

1800

Apparatus for determining a text similarity

Processing module — 1801

Calculation module — 1802

FIG. 24

1900

Apparatus for obtaining a
semantic answer text

Obtaining
module — 1901

Determining
module — 1902

FIG. 25

2000

Question answering
apparatus

Obtaining
module — 2001

Identification
module — 2002

Output
module — 2003

FIG. 26

2100

Question answering apparatus

Display module — 2101

Obtaining module — 2102

Output module — 2103

FIG. 27

## INTERNATIONAL SEARCH REPORT

| International application No. |
| --- |
| **PCT/CN2020/131554** |

**A.    CLASSIFICATION OF SUBJECT MATTER**

G06F 16/33(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; DWPI; SIPOABS; CNKI; CNTXT: 文本, 相似度, 语义, 向量, 词, 嵌入, 正向, 反向, 余弦, 函数, 交集, 并集, 分类, 实体, 建议, 答案; text, similarity, semantics, vector, word, embed+, positive, opposite, cosine, function, intersection, union, classification, entity, suggest+, recommend+, answer

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110457432 A (PING AN TECHNOLOGY (SHENZHEN) CO., LTD.) 15 November 2019 (2019-11-15) description, paragraphs [0002]-[0165] | 1-4, 8, 10, 29-30, 33, 34 |
| Y | CN 110457432 A (PING AN TECHNOLOGY (SHENZHEN) CO., LTD.) 15 November 2019 (2019-11-15) description, paragraphs [0002]-[0165] | 5-7, 9, 11-28, 31, 32 |
| Y | CN 109766427 A (CHONGQING UNIVERSITY OF POSTS AND TELECOMMUNICATIONS) 17 May 2019 (2019-05-17) description, paragraphs [0002]-[0093] | 5-7 |
| Y | CN 109670022 A (NANJING UNIVERSITY OF AERONAUTICS AND ASTRONAUTICS) 23 April 2019 (2019-04-23) description, paragraphs [0002]-[0080] | 9 |
| Y | CN 109471948 A (WEIHAI TIANXIN MODERN SERVICE TECHNOLOGY RESEARCH INSTITUTE CO., LTD.) 15 March 2019 (2019-03-15) description, paragraphs [0002]-[0120] | 11-28, 31, 32 |

☑ Further documents are listed in the continuation of Box C.       ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **01 February 2021** | **08 February 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/131554** |

**C.    DOCUMENTS CONSIDERED TO BE RELEVANT**

| Category* | Citation of document, with indication, where appropriate, of the relevant passages | Relevant to claim No. |
|---|---|---|
| A | CN 109344245 A (ANHUI ULTRAPOWER XIANGSHENG SOFTWARE CO., LTD.) 15 February 2019 (2019-02-15)<br>      entire document | 1-34 |

Form PCT/ISA/210 (second sheet) (January 2015)

**INTERNATIONAL SEARCH REPORT**
Information on patent family members

International application No.

**PCT/CN2020/131554**

| Patent document cited in search report | | | Publication date (day/month/year) | Patent family member(s) | | | Publication date (day/month/year) |
|---|---|---|---|---|---|---|---|
| CN | 110457432 | A | 15 November 2019 | None | | | |
| CN | 109766427 | A | 17 May 2019 | None | | | |
| CN | 109670022 | A | 23 April 2019 | None | | | |
| CN | 109471948 | A | 15 March 2019 | None | | | |
| CN | 109344245 | A | 15 February 2019 | CN | 108763569 | A | 06 November 2018 |
| | | | | CN | 109344245 | B | 23 July 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911168162